(19) Europäisches Patentamt
European Patent Office
Office européen des brevets

(11) EP 3 898 752 B1

# (12) EUROPÄISCHE PATENTSCHRIFT

(45) Veröffentlichungstag und Bekanntmachung des Hinweises auf die Patenterteilung:
**15.10.2025 Patentblatt 2025/42**

(21) Anmeldenummer: **19828594.2**

(22) Anmeldetag: **10.12.2019**

(51) Internationale Patentklassifikation (IPC):
***C08G 18/76*** *(2006.01)* ***C08K 5/11*** *(2006.01)*
***C08G 18/79*** *(2006.01)* ***B22C 1/22*** *(2006.01)*
***C08G 14/04*** *(2006.01)* ***C08G 18/28*** *(2006.01)*
***C08G 18/54*** *(2006.01)* ***C08G 8/08*** *(2006.01)*

(52) Gemeinsame Patentklassifikation (CPC):
**C08G 18/7664; B22C 1/2273; C08G 8/08; C08G 18/2895; C08G 18/542; C08G 18/797**

(86) Internationale Anmeldenummer:
**PCT/EP2019/084470**

(87) Internationale Veröffentlichungsnummer:
**WO 2020/126689 (25.06.2020 Gazette 2020/26)**

(54) **ISOCYANAT-KOMPOSITION UND BINDEMITTELSYSTEM ENTHALTEND DIESE ISOCYANAT-KOMPOSITION**

ISOCYANATE COMPOSITION AND BINDER SYSTEM CONTAINING SAID ISOCYANATE COMPOSITION

COMPOSITION ISOCYANATE ET SYSTÈME DE LIANT CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018 DE 102018133239**

(43) Veröffentlichungstag der Anmeldung:
**27.10.2021 Patentblatt 2021/43**

(73) Patentinhaber: **HÜTTENES-ALBERTUS Chemische Werke Gesellschaft mit beschränkter Haftung**
**40549 Düsseldorf (DE)**

(72) Erfinder:
- **KLOSE, Annika**
  **30171 Hannover (DE)**
- **SCHABRUCKER, Markus**
  **40629 Düsseldorf (DE)**

(74) Vertreter: **Eisenführ Speiser Patentanwälte Rechtsanwälte PartGmbB**
**Postfach 10 60 78**
**28060 Bremen (DE)**

(56) Entgegenhaltungen:
**WO-A1-2016/165916**
**WO-A1-2019/137583**
**DE-A1- 102015 107 016**
**US-A- 4 273 179**
**US-A1- 2008 071 055**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 898 752 B1

## Beschreibung

Isocyanat-Komposition und Bindemittelsystem enthaltend diese Isocyanat-Komposition Die vorliegende Erfindung betrifft eine Isocyanat-Komposition, insbesondere zur Verwendung in einem Verfahren aus der Gruppe bestehend aus Polyurethan-Cold-Box-Verfahren und Polyurethan-No-Bake-Verfahren, ein Bindemittelsystem, insbesondere zur Verwendung in einem Verfahren aus der Gruppe bestehend aus Polyurethan-Cold-Box-Verfahren und Polyurethan-No-Bake-Verfahren, und ein Verfahren, bei dem ein erfindungsgemäßes Bindemittelsystem verwendet wird. Die vorliegende Erfindung betrifft weiterhin die Verwendung von β-Dicarbonylverbindungen zur Herstellung erfindungsgemäßer Isocyanat-Kompositionen, die Verwendung einer erfindungsgemäßen Isocyanat-Komposition zur Herstellung eines erfindungsgemäßen Bindemittelsystems sowie die Verwendung eines erfindungsgemäßen Bindemittelsystems zur Herstellung von Artikeln aus der Gruppe bestehend aus Gießereiformen, Gießereikernen und Speisern. Die Erfindung ist dargelegt im angefügten Anspruchssatz.

Bei der Herstellung von Speisern, Gießereiformen und Gießereikernen werden zur Bindung des Formgrundstoffs häufig unter Polyurethanbildung kalthärtende Bindemittelsysteme eingesetzt. Diese Bindemittelsysteme bestehen aus zwei Komponenten, einem (normalerweise in einem Lösemittel gelösten) Polyol mit mindestens zwei OH-Gruppen im Molekül (Polyol-Komponente) und einem (in einem Lösemittel gelösten oder lösemittelfreien) Polyisocyanat mit mindestens zwei Isocyanat-Gruppen im Molekül (Polyisocyanat-Komponente). Die Polyol-Komponente ist meistens ein in einem Lösemittel gelöstes Phenolharz. Die Polyol-Komponente wird daher nachfolgend als Phenolharz-Komponente bezeichnet. Die beiden Bindemittel-Komponenten, die zur Herstellung einer Formstoffmischung einem Formgrundstoff zugesetzt und mit diesem vermischt werden, reagieren in der geformten Formstoffmischung in einer Polyadditionsreaktion zu einem Polyurethan-Bindemittel. Das Härten des Bindemittelsystems erfolgt dabei in Gegenwart basischer Katalysatoren, bevorzugt in Form tertiärer Amine, die nach der Formung der Formstoffmischung mit einem Trägergas in das Formwerkzeug eingeführt werden (Polyurethan-Cold-Box-Verfahren) oder die vor der Formung der Formstoffmischung als Lösung zugesetzt werden (Polyurethan-No-Bake-Verfahren). Derartige Bindemittelsystem werden beispielsweis beschrieben in den Patentanmeldungen WO 2017/153474 A1 und WO 2016/165916 A1.

DE 10 2015 107 016 A1 offenbart ein Verfahren zur Herstellung von Benzylether-Harzen und von Formstoffmischungen enthaltend derartige Benzylether-Harze für das Phenolharz-Polyurethan-Cold Box-Verfahren und/oder das Phenolharz-Polyurethan-No-Bake-Verfahren, wobei die Benzylether-Harze einen geringen Restgehalt an freiem Formaldehyd aufweisen.

US 4,273,179 offenbart die Verwendung bestimmter dibasischer Ester als Lösungsmittel für die Harzkomponente oder die Polyisocyanat-Komponente eines Zweikomponenten-Bindemittels.

US 2008/0071055 A1 offenbart eine lagerstabile flüssige modifizierte Diisocyanat- und/oder Polyisocyanat-Komposition.

WO 2019/137583 A1 (Veröffentlichungsdatum 18. Juli 2019, Stand der Technik gemäß Art. 54 (3) EPÜ) offenbart formaldehydreduzierte Phenolharze vom Benzylethertyp, enthaltend zumindest einen Formaldehydfänger in Form einer beta-Dicarbonyl-Verbindung und weiterhin eine alpha-Carbonyl-Carboxyl-Verbindung, insbesondere Glyoxylsäure, Bindemittel auf Basis dieser Phenolharze und Isocyanat-Verbindungen mit zumindest zwei Isocyanat-Gruppen zum Einsatz in Phenolharz-Polyurethan-Cold Box-Verfahren und/oder Phenolharz-Polyurethan-No-Bake-Verfahren.

Beim Verarbeiten von Phenol-Formaldehyd-Harzen lassen sich Emission von Formaldehyd nicht völlig vermeiden. Diese Emissionen beim Verarbeiten von Phenol-Formaldehyd-Harzen, aber auch Ausdünstungen und Ausgasungen von Formaldehyd aus im Polyurethan-Cold-Box- bzw. Polyurethan-No-Bake-Verfahren hergestellten Speisern, Gießereikernen und Gießereiformen stellen eine erhebliche Arbeitsplatzbelastung dar, die zumeist nicht ausreichend durch Schutzmaßnahmen wie Abzugshauben oder dergleichen abgefangen werden kann.

Die Freisetzung von Formaldehyd aus derartigen Speisern, Gießereikernen und Gießereiformen wird insbesondere durch erhöhte Temperatur begünstigt. Zwar erfolgt im Polyurethan-Cold-Box-Verfahren und im Polyurethan-No-Bake-Verfahren das Härten des Bindemittelsystems ohne Wärmezufuhr. Bei der Verwendung der Speiser, Gießereikern und Gießereiformen im Metallguss liegen jedoch stets Bedingungen vor, unter denen es zur Emission von Formaldehyd kommt.

In bestimmten Fällen umfasst die Herstellung von Speisern, Gießereikernen und Gießereiformen dem Härten des Bindemittelsystems nachgelagerte Schritte, in denen im Polyurethan-Cold-Box-Verfahren bzw. im Polyurethan-No-Bake-Verfahren hergestellte Formkörper einer erhöhten Temperatur ausgesetzt sind.

Insbesondere beim Stahl- und Eisenguss werden bevorzugt Gießereiformen und Gießereikerne eingesetzt, deren Oberfläche Bereiche aufweist, in denen ein Partikel eines oder mehrerer Feuerfeststoffe umfassender Überzug angeordnet ist. Dieser Überzug bildet eine Oberfläche der Form oder des Kerns, die beim Gießvorgang mit einer Metallschmelze in Kontakt kommt. Ein derartiger Überzug wird üblicherweise als Schlichte oder Schlichteüberzug bezeichnet. Dieser Überzug wirkt als Grenz- und/oder Sperrschicht gegenüber dem gegossenen Metall, und dient u.a. zur Unterdrückung von Mechanismen der Gussfehlerbildung an der Grenzfläche zwischen Metall und Kern bzw. Form und/oder zur gezielten Nutzung metallurgischer Effekte. Allgemein sollen Schlichten in der Gießereitechnik vor allem

folgende, dem Fachmann bekannte, Funktionen erfüllen:

- Verbesserung der Glätte der Gussstückoberfläche und/oder;
- Vermeidung von chemischen Reaktionen zwischen Bestandteilen der Formstoffmischung und der Metallschmelze, dadurch Erleichterung der Trennung zwischen Form/Kern und Gussstück und/oder
- Vermeidung von Oberflächenfehlern am Gussstück wie z.B. Gasblasen, Penetrationen, Blattrippen und/oder Schülpen.

Gebrauchsfertige Zusammensetzungen (in der Praxis üblicherweise als Schlichtezusammensetzungen bezeichnet) zur Herstellung von Überzügen für Gießereiformen und Gießereikerne sind meist Suspensionen von feinkörnigen, feuerfesten bis hochfeuerfesten anorganischen Materialien (Feuerfeststoffen) in einer Trägerflüssigkeit (z.B. Wasser, Alkanole, oder Mischungen aus Wasser und einem oder mehreren Alkanolen), wobei oft weitere Bestandteile in der Trägerflüssigkeit suspendiert oder gelöst sind. Zur Herstellung einer Gie-ßereiform oder eines Gießereikerns wird die Schlichtezusammensetzung auf die entsprechenden Oberflächenbereiche eines Formkörpers aufgetragen, und anschließend wird durch thermische Behandlung die Trägerflüssigkeit entfernt, wobei ein Überzug ausgebildet wird. Das Entfernen der Trägerflüssigkeit erfolgt üblicherweise bei einer Temperatur oberhalb von 40 °C, vorzugsweise im Bereich von 50 °C bis 200 °C. Bei diesen Temperaturen emittieren Formkörper, die aus einer Formstoffmischung umfassend ein unter Bildung eines Polyurethans härtendes Bindemittelsystem hergestellt worden sind, signifikante Mengen an Formaldehyd. Derartige Emissionen stellen eine erhebliche Arbeitsplatzbelastung dar.

Die Aufgabe der vorliegenden Erfindung besteht darin, die Emissionen vom Formaldehyd zu vermindern, welche insbesondere (aber nicht nur) unter thermischer Belastung von Speisern, Gießereikernen und Gießereiformen freigesetzt werden, die aus einer Formstoffmischung mit einem Bindemittelsystem umfassend eine Phenolharz-Komponente und eine Polyisocyanat-Komponente hergestellt worden sind.

Diese Aufgabe wird gemäß einem ersten Aspekt der Erfindung gelöst durch eine Isocyanat-Komposition, insbesondere zur Verwendung in einem Verfahren aus der Gruppe bestehend aus Polyurethan-Cold-Box- und Polyurethan-No-Bake-Verfahren, wie in Anspruch 1 definiert.

Isocyanate mit zwei oder mehr Isocyanat-Gruppen pro Molekül werden allgemein als Polyisocyanate bezeichnet. Isocyanate mit genau zwei Isocyanat-Gruppen pro Molekül werden speziell als Diisocyanate bezeichnet.

Die Isocyanate a) mit mindestens zwei Isocyanat-Gruppen pro Molekül sind vorzugsweise ausgewählt aus der Gruppe bestehend aus

- Methylenbis(phenylisocyanaten) (abgekürzt MDI, diese werden in der Praxis oft als Diphenylmethandiisocyanate bezeichnet), bevorzugt 4.4'-Methylenbis(phenylisocyanat),
- Polymethylen-Polyphenyl-Isocyanaten (auch als "polymeres MDI" bezeichnet),
- aliphatischen Isocyanaten,
- cycloaliphatischen Isocyanaten,
- Isocyanaten mit mindestens zwei Isocyanat-Gruppen und einer Carbodiimid-Gruppe pro Molekül (auch als carbodiimid-modifizierte Di- bzw. Polyisocyanate bezeichnet), bevorzugt carbodiimid-modifiziertes MDI,
- Isocyanaten mit mindestens zwei Isocyanat-Gruppen und einer Urethonimin-Gruppe pro Molekül (auch als urethonimin-modifizierte Di- bzw. Polyisocyanate bezeichnet), bevorzugt urethonimin-modifiziertes MDI.

Der Begriff "polymeres MDI" umfasst auch Mischungen verschiedener Polymethylen-Polyphenyl-Isocyanate.

Struktur und Herstellung carbodiimid-modifizierter Di- bzw. Polyisocyanate und urethonimin-modifizierter Di- bzw. Polyisocyanate sind dem Fachmann bekannt und werden u.a. im Kunststoff-Handbuch, Band 7 "Polyurethane" (Carl Hanser Verlag München Wien 1993), in dem Fachbuch "Synthetic Methods in Step-Growth Polymers" (edited by Martin E. Rogers and Timothy Long, Wiley 2003), sowie z.B. in EP 0054294B1, WO 2007/065578A1, und US 10,011,677 B2 beschrieben. Die Verwendung von carbodiimid- und/oder urethonimin-modifiziertem MDI in einem Verfahren aus der Gruppe bestehend aus Polyurethan-Cold-Box-Verfahren und Polyurethan-No-Bake-Verfahren wird u.a. in EP 2 640 764 B1 beschrieben.

Es können Mischungen verschiedener Isocyanate a) mit mindestens zwei Isocyanat-Gruppen pro Molekül eingesetzt werden, z.B.

- Mischungen von MDI und polymeren MDI
- Mischungen von MDI mit carbodiimid-modifiziertem MDI und/oder urethonimin-modifiziertem MDI
- Mischungen von polymerem MDI mit carbodiimid-modifiziertem MDI und/oder urethonimin-modifiziertem MDI.

Der Begriff "ß-Dicarbonylverbindungen" b) (beta-Dicarbonylverbindungen) bezeichnet gemäß seiner auf dem Gebiet der Chemie üblichen Bedeutung organische Verbindungen mit zwei Carbonylgruppen C=O pro Molekül, wobei die Kohlenstoffatome der beiden Carbonylgruppen über ein einziges Kohlenstoffatom miteinander verbunden sind, welches nicht Bestandteil einer Carbonylgruppe ist.

Durch Reaktionen mit Formaldehyd sind β-Dicarbonylverbindungen in der Lage, molekulares Formaldehyd unter Bildung nicht flüchtiger Reaktionsprodukte zu binden, sie wirken also als Formaldehyd-Fänger. Diese Wirkung von β-Dicarbonylverbindungen ist u.a. in der Patentanmeldung WO 2016/165916 A1 beschrieben.

Da in der erfindungsgemäßen Isocyanat-Komposition kein Formaldehyd enthalten ist, erfolgt die erwähnte Umsetzung der β-Dicarbonylverbindungen b) mit Formaldehyd erst dann, wenn die in der erfindungsgemäßen Isocyanat-Komposition enthaltenen β-Dicarbonylverbindungen b) mit molekularem Formaldehyd in Kontakt kommen. Dies ist beispielsweise dann der Fall, wenn bei der Herstellung einer Formstoffmischung die erfindungsgemäße Isocyanat-Komposition als Polyisocyanat-Komponente (ii) eines unter Polyurethanbildung härtenden Bindemittelsystems mit einer Phenolharz-Komponente (i) kombiniert wird, die eine signifikante Konzentration an molekularem Formaldehyd aufweist (zu Details siehe unten), oder wenn ein aus einer solchen Formstoffmischung hergestellter Formkörper einer thermischen Belastung ausgesetzt ist.

Zwar ist es erfindungsgemäß bevorzugt, zur Herstellung von Formkörpern ein Bindemittelsystem einzusetzen, dessen Phenolharz-Komponente (i) eine sehr geringe Konzentration an molekularem Formaldehyd aufweist (zu Details siehe unten), und das Bindemittelsystem ohne Wärmezufuhr nach einem Verfahren aus der Gruppe bestehend aus dem Polyurethan-Cold-Box-Verfahren und dem Polyurethan-No-Bake-Verfahren zu härten (zu Details siehe unten). Aber auch so hergestellte Formkörper neigen dazu, im Laufe der Zeit, insbesondere bei thermischer Belastung, Formaldehyd freizusetzen. Dieses wird durch Umsetzung mit den erfindungsgemäß in der Polyisocyanat-Komponente (ii) des Bindemittelsystems enthaltene(n) *ß*-Dicarbonylverbindung(en) b) zu nichtflüchtigen Reaktionsprodukten gebunden, so dass die Emission von Formaldehyd vermindert wird.

Die *ß*-Dicarbonylverbindungen b) sind bevorzugt ausgewählt aus der Gruppe der Dialkylester der Malonsäure (Dialkylmalonate), wobei die Alkylgruppen unabhängig voneinander ausgewählt sind aus Alkylgruppen mit 1 bis 4 Kohlenstoffatomen. Besonders bevorzugt sind Diethylmalonat (Malonsäurediethylester) und Dimethylmalonat (Malonsäuredimethylester).

Typische Reaktionsprodukte von Dialkylmalonaten mit Formaldehyd sind z.B. 2-Methylenmalonester, 2,2-Bis(hydroxymethyl)malonester, 2-(Hydroxymethyl)malonester und 2-(3-Hydroxy-2-oxapropyl)malonester. Zu weiteren Details sei auf die Patentanmeldung WO 2016/165916 A1 verwiesen.

Der Begriff Lösemittel c) umfasst sowohl einzelne als Lösemittel wirkende Verbindungen als auch als Lösemittel wirkende Gemische verschiedener Verbindungen. Das Lösemittel c) ist eine Flüssigkeit, in der die Bestandteile a) und b) und ggf. weitere Bestandteile der erfindungsgemäßen Isocyanat-Komposition, soweit sie Feststoffe sind, gelöst sind bzw. mit der die Bestandteile a) und b) und ggf. weitere Bestandteile der erfindungsgemäßen Isocyanat-Komposition, soweit sie Flüssigkeiten sind, mischbar sind, so dass die Isocyanat-Komposition aus einer einzigen flüssigen Phase besteht. Das Lösemittel c) dient insbesondere dazu, die Viskosität der Isocyanat-Komposition so einzustellen, dass die Vermischung mit einem Formgrundstoff erleichtert wird. Das Lösemittel c) ist keine Verbindung aus der Gruppe bestehend aus Isocyanaten, β-Dicarbonylverbindungen und Aldehyden. Das Lösemittel c) umfasst keine Verbindung aus der Gruppe bestehend aus Isocyanaten, β-Dicarbonylverbindungen und Aldehyden.

Das Lösemittel c) ist bevorzugt ausgewählt aus der Gruppe bestehend aus

- Dialkylester von $C_4$-$C_6$-Dicarbonsäuren (in der Praxis häufig als "dibasic ester" bezeichnet), bevorzugt aus der Gruppe bestehend aus Dimethyladipat, Dimethylglutarat, und Dimethylsuccinat,
- gesättigte und ungesättigte Fettsäurealkylester, bevorzugt Pflanzenölalkylester, bevorzugt aus der Gruppe bestehend aus Rapsölmethylester, Tallölmethylester, Tall-ölbutylester, Laurinsäuremethylester, Laurinsäureisopropylester, Myristinsäureisopropylester, und Myristinsäureisobutylester,
- Alkylencarbonate, vorzugsweise Propylencarbonat,
- bei 25°C und 101,325 kPa flüssige Kohlenwasserstoffe, bevorzugt aus der Gruppe bestehend aus Cycloalkanen, Alkanen mit 6 bis 22 Kohlenstoffatomen und aromatischen Kohlenwasserstoffen, wobei die aromatischen Kohlenwasserstoffe bevorzugt ausgewählt sind aus der Gruppe bestehend aus Alkylbenzolen, Alkenylbenzolen, Dialkyl-Naphthalinen und Dialkenyl-Naphthalinen,

- Verbindungen aus der Gruppe der Alkylsilane, Alkyl/Alkoxy-Silane, Alkoxysilane, Alkylsiloxane, Alkyl/Alkoxy-Siloxane und Alkoxysiloxane der Formel (I)

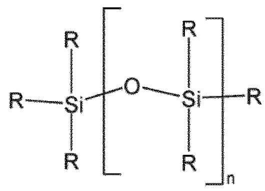

(I)

wobei in Formel (I)

n eine ganze Zahl ist von 0 bis 20, und

jedes R unabhängig von den anderen R ausgewählt ist aus der Gruppe der Alkylgruppen mit einem bis 6 Kohlenstoffatomen und der Alkoxygruppen mit einem bis 6 Kohlenstoffatomen

und deren Mischungen.

Verbindungen der Formel (I), in denen n=0 und alle Gruppen R Alkylgruppen sind, sind Alkylsilane. Verbindungen der Formel (I), in denen n=0 und alle Gruppen R Alkoxygruppen sind, sind Alkoxylsilane (auch als Alkylsilikate bezeichnet). Verbindungen der Formel (I), in denen n=0 und eine oder mehrere Gruppen R Alkylgruppen sind, und die restlichen Gruppen R Alkoxygruppen sind, sind Alkyl/Alkoxy-Silane. Verbindungen der Formel (I), in denen n>0 und alle Gruppen R Alkylgruppen sind, sind Alkylsiloxane. Verbindungen der Formel (I), in denen n>0 und alle Gruppen R Alkoxygruppen sind, sind Alkoxylsiloxane. Verbindungen der Formel (I), in denen n>0 und eine oder mehrere Gruppen R Alkylgruppen sind, und die restlichen Gruppen R Alkoxygruppen sind, sind Alkyl/Alkoxy-Siloxane. Bevorzugte Verbindungen der Formel (I) sind Alkoxysilane (Alkylsilikate) (d.h. in Formel (I) ist n=0) und Alkoxysiloxane (Alkylsilikat-Oligomere) worin n eine ganze Zahl ist von 2 bis 5, wobei die Alkoxygruppen bevorzugt Ethoxy-, Propoxy- oder Butoxy-Gruppen sind. Besonders bevorzugt sind Tetraethylorthosilikat (TEOS) und Ethoxysiloxane, worin n eine ganze Zahl ist von 2 bis 5.

Der Begriff "Kohlenwasserstoffe" bezeichnet gemäß seiner auf dem Gebiet der Chemie üblichen Bedeutung organische Verbindungen, die nur aus Kohlenstoff und Wasserstoff bestehen.

Besonders bevorzugt sind Isocyanat-Kompositionen, in denen

a) ein oder mehrere (bevorzugt alle) Isocyanate mit mindestens zwei Isocyanat-Gruppen pro Molekül ausgewählt sind aus der Gruppe bevorzugter Isocyanate wie oben beschrieben, und

b) eine oder mehrere (bevorzugt alle) β-Dicarbonylverbindungen ausgewählt sind aus der Gruppe der Dialkylmalonate, und

c) das Lösemittel ausgewählt ist aus der Gruppe bevorzugter Lösemittel wie oben beschrieben.

Speziell bevorzugt sind Isocyanat-Kompositionen enthaltend

a) ein oder mehrere Isocyanate aus der Gruppe bestehend aus MDI, polymerem MDI, carbodiimid-modifiziertem MDI und urethonimin-modifiziertem MDI und deren Mischungen, wobei die Gesamtkonzentration der genannten Isocyanate a) 75 % bis 85 % beträgt, und

b) eine oder mehrere β-Dicarbonylverbindungen aus der Gruppe bestehend aus Diethylmalonat und Dimethylmalonat, wobei die Gesamtkonzentration der genannten β-Dicarbonylverbindungen b) 1 % bis 5 % beträgt, und

c) als Lösemittel

- eine oder mehrere Verbindungen aus der Gruppe der Alkoxysilane (Alkylsilikate) gemäß Formel (I) wie oben

definiert (d.h.in Formel (I) ist n=0) und Alkoxysiloxane (Alkylsilikat-Oligomere) gemäß Formel (I) wie oben definiert worin n eine ganze Zahl ist von 2 bis 5, wobei die Alkoxygruppen bevorzugt EthoxyGruppen sind, bevorzugt Tetraethylorthosilikat
oder

- eine oder mehrere Verbindungen aus der Gruppe der Alkylencarbonate (bevorzugt Propylencarbonat) und der Fettsäurealkylester (bevorzugt aus der Gruppe bestehend aus Rapsölmethylester und Tallölmethylester),

wobei die Konzentration des Lösemittels c) 5 % bis 24 % beträgt,

wobei die Konzentration der Bestandteile a), b) und c) jeweils auf die Gesamtmasse der Isocyanat-Komposition bezogen ist.

In bestimmten Fällen enthält die erfindungsgemäße Isocyanat-Komposition weitere Bestandteile d).

So ist es in einigen Fällen bevorzugt, dass die erfindungsgemäße Polyisocyanat-Komponente d) ein oder mehrere Substanzen enthält aus der Gruppe bestehend aus

- Silane,
- Säurechloride, z.B. Phosphorylchlorid, Phthaloylchlorid,
- Chlorsilane,
- Methansulfonsäure,
- Ester von Phosphor-Sauerstoffsäuren,
- Additiv herstellbar durch Umsetzenlassen einer Vormischung von

  (av) 1,0 % bis 50,0 % Methansulfonsäure

  (bv) einem oder mehreren Estern von einer oder mehreren Phosphor-SauerstoffSäuren, wobei die Gesamtmenge der Ester (bv) im Bereich von 5,0 % bis 90,0 % liegt,

  (cv) einem oder mehreren Silanen, ausgewählt aus der Gruppe bestehend aus Aminosilanen, Epoxysilanen, Mercaptosilanen und Ureidosilanen, wobei die Gesamtmenge der Silane (cv) im Bereich von 5,0 % bis 90,0 % liegt,

  wobei der Anteil an Wasser maximal 0,1 % beträgt,

  jeweils bezogen sind auf die Gesamtmenge der Bestandteile (av), (bv) und (cv) in der Vormischung.

Die o.g. Bestandteile d) dienen im Wesentlichen dazu, durch Inhibieren der Polyurethanbildung die Zeitdauer zu verlängern, während der eine Formstoffmischung, in die beide Komponenten des Bindemittelsystems eingemischt sind, trotz der hohen Reaktivität des Bindemittelsystems gelagert werden kann ("Sandlebenszeit"), ohne unbrauchbar zu werden, d.h. nicht mehr formbar zu sein. Lange Sandlebenszeiten sind erwünscht, damit eine vorbereitete Charge einer Formstoffmischung nicht durch vorzeitiges Härten des Bindemittelsystems unbrauchbar wird. Die o.g. Additive werden auch als Bench Life Extender bezeichnet und sind dem Fachmann bekannt. Typischerweise werden konventionell vor allem Säurechloride aus der Gruppe bestehend aus Phosphorylchlorid $POCl_3$ (CAS-Nr. 10025-87-3), o-Phthaloylchlorid (1,2-Benzenedicarbonylchlorid, CAS-Nr. 88-95-9) und Benzolphosporoxydichlorid (CAS-Nr: 842-72-6) eingesetzt. Weitere geeignete Additive sind Methansulfonsäure sowie Phosphor-Sauerstoffsäuren, bevorzugt aus der Gruppe bestehend aus Phosphinsäure, Phosphonsäure, Phosphorsäure, Peroxophosphorsäure, Hypodiphosphonsäure, Diphosphonsäure, Hypodiphosphorsäure, Diphosphorsäure und Peroxodiphosphorsäure. Ein bevorzugtes die Sandlebenszeit verlängerndes Additiv ist eine Additivmischung herstellbar durch Umsetzenlassen einer Vormischung der oben genannten Komponenten (av), (bv) und (cv) wie in der Patentanmeldung WO 2013/117256 beschrieben.

In einigen Fällen enthält die erfindungsgemäße Isocyanat-Komposition ein oder mehrere weitere Bestandteile d) aus der Gruppe der Weichmacher.

Bezogen auf die Gesamtmasse der erfindungsgemäßen Isocyanat-Komposition beträgt die Gesamtkonzentration aller Substanzen d) 5 % oder weniger, bevorzugt 3 % oder weniger.

Ein zweiter Aspekt der vorliegenden Erfindung betrifft ein Bindemittelsystem, insbesondere zur Verwendung in einem Verfahren aus der Gruppe bestehend aus dem Polyurethan-Cold-Box-Verfahren und dem Polyurethan-No-Bake-Verfahren, wobei das Bindemittelsystem umfasst:

(i) eine Phenolharz-Komponente und

(ii) eine davon getrennten Polyisocyanat-Komponente,

wobei

(i) die Phenolharzkomponente enthält:

e) ein oder mehrere Phenolharze

f) ein Lösemittel

wobei bezogen auf die Gesamtmasse der Phenolharz-Komponente die Konzentration der Phenolharze e) 40 % bis 60 %, bevorzugt 45 % bis 60 %, besonders bevorzugt 48 % bis 55 % beträgt,
und

(ii) die Polyisocyanat-Komponente eine Isocyanat-Komposition ist gemäß dem oben beschriebenen ersten Aspekt der vorliegenden Erfindung.

Bevorzugt besteht das erfindungsgemäße Bindemittelsystem zur Verwendung im Polyurethan-Cold-Box-Verfahren oder im Polyurethan-No-Bake-Verfahren aus

(i) einer Phenolharz-Komponente wie oben definiert und
(ii) einer davon getrennten Polyisocyanat-Komponente wie oben definiert.

In dem erfindungsgemäßen Bindemittelsystem liegt das stöchiometrische Verhältnis von Isocyanat-Gruppen in der Polyisocyanat-Komponente (ii) zu Hydroxy-Gruppen in der Phenolharz-Komponente (i) vorzugsweise im Bereich von 0,5 bis 1,5, weiter bevorzugt im Bereich von 0,6 bis 1,4, mehr bevorzugt im Bereich von 0,7 bis 1,3, besonders bevorzugt im Bereich von 0,8 bis 1,2, ganz besonders bevorzugt im Bereich von 0,9 bis 1,1, speziell bevorzugt im Bereich von 0,95 bis 1,05. Während es in vielen Fällen bevorzugt ist, dass das stöchiometrische Verhältnis von Isocyanat-Gruppen in der Polyisocyanat-Komponente (ii) zu Hydroxy-Gruppen in der Phenolharz-Komponente (i) nahe 1 ist, gibt es auch Fälle, in denen es vorteilhaft ist, dass ein Überschuss an Isocyanat-Gruppen relativ zu den Hydroxy-Gruppen vorliegt, und auch Fälle, in denen es vorteilhaft ist, dass ein Überschuss an Hydroxy-Gruppen relativ zu Isocyanat-Gruppen vorliegt.

Hinsichtlich bevorzugter Merkmale und Ausführungsformen der Isocyanat-Komposition, die die Polyisocyanat-Komponente (ii) des erfindungsgemäßen Bindemittelsystems bildet, gelten die obenstehenden Ausführungen zum ersten Aspekt der vorliegenden Erfindung.

Im erfindungsgemäßen Bindemittelsystem sind die Phenolharz-Komponente (i) und die Polyisocyanat-Komponente (ii) voneinander getrennt, d.h. sie liegen in separaten Behältern vor, denn die Additionsreaktion (Polyurethanbildung) zwischen dem Phenolharz der Phenolharz-Komponente (i) und dem Polyisocyanat der Polyisocyanat-Komponente (ii) soll erst dann eintreten, wenn beide Komponenten in einer Formstoffmischung mit einem Formgrundstoff und optional weiteren Bestandteilen der herzustellenden Formstoffmischung vermischt worden sind und diese Formstoffmischung geformt worden ist.

Der Begriff Lösemittel f) umfasst sowohl einzelne als Lösemittel wirkende Verbindungen als auch als Lösemittel wirkende Gemische verschiedener Verbindungen. Das Lösemittel f) ist eine Flüssigkeit, in der Bestandteil e) und ggf. weitere Bestandteile der Phenolharz-Komponente (i), soweit sie Feststoffe sind, gelöst sind bzw. mit der Bestandteil e) und ggf. weitere Bestandteile der Phenolharz-Komponente (i), soweit sie Flüssigkeiten sind, mischbar sind, so dass die Phenolharz-Komponente aus einer einzigen flüssigen Phase besteht. Das Lösemittel f) dient insbesondere dazu, die Viskosität der Phenolharz-Komponente (i) so einzustellen, dass die Vermischung mit einem Formgrundstoff erleichtert wird.

Phenolharze sind Kondensationsprodukte von einem oder mehreren Phenol-Monomeren der allgemeinen Formel (II)

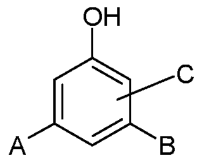

(II)

mit einem oder mehreren Aldehyden der allgemeinen Formel R'CHO, in der R' ein Wasserstoffatom oder eine Alkylgruppe mit 1 bis 8 Kohlenstoffatomen ist. In Formel (II) sind A, B und C unabhängig voneinander ausgewählt aus der Gruppe bestehend aus Wasserstoff, ungesättigten aliphatischen Gruppen mit maximal 16 Kohlenstoff-Atomen und gesättigten aliphatischen Gruppen mit maximal 16 Kohlenstoff-Atomen. Dabei sind die aliphatischen Gruppen vorzugsweise Alkylgruppen, bevorzugt aus der Gruppe bestehend aus Methyl, Ethyl, n-Propyl, i-Propyl, n-Butyl, i-Butyl, tert-Butyl, Octyl und Nonyl, oder Alkenyl-Gruppen, bevorzugt aus der Gruppe bestehend aus Pentadecenyl, Pentadecadienyl und Pentadecatrienyl. Bevorzugt sind Phenol-Monomere der Formel (II), in denen mindestens einer der Substituenten A, B und C, bevorzugt zwei der Substituenten A, B und C oder alle Substituenten A, B und C Wasserstoff sind.

Für die Herstellung von Phenolharzen geeignete Phenol-Monomere, welche unter die Formel (II) fallen, sind z.B. Phenol (Hydroxybenzen $C_6H_5OH$), Alkylphenole wie z.B. o-Kresol, m-Kresol, p-Kresol, p-Butylphenol, p-Octylphenol, p-Nonylphenol, sowie Cardanol (Bezeichnung für Verbindungen der Formel (II), wobei A und C Wasserstoff sind und B eine aliphatische, unverzweigte Alkenyl-Gruppe mit 15 Kohlenstoff-Atomen und 0, 1, 2 oder 3 Doppelbindungen ist).

Phenol (Hydroxybenzen $C_6H_5OH$), o-Kresol, Cardanol und deren Mischungen sind bevorzugte Phenol-Monomere für die Herstellung von Phenolharzen. Als Aldehyd für die Herstellung von Phenolharzen ist Formaldehyd bevorzugt, welches auch in Form von Paraformaldehyd eingesetzt werden kann. Formaldehyd wird entweder als einziges Aldehyd oder in Kombination mit einem oder mehr weiteren Aldehyden eingesetzt.

Die Phenolharz-Komponente (i) des erfindungsgemäßen Bindemittelsystems enthält bevorzugt ein Phenolharz e) in Form eines ortho-kondensierten Resols. "Ortho-kondensiertes Resol" bezeichnet ein Phenolharz, dessen Moleküle

- durch Methylenether-Brücken in ortho, ortho'-Stellung verknüpfte aus Phenol-Monomeren gebildete aromatische Ringe
- und in ortho-Stellung angeordnete endständige (terminale) Methylolgruppen aufweisen, wobei die terminalen Methylolgruppen verethert sein können.

Der Begriff "ortho" bezeichnet die ortho-Stellung und die ortho'-Stellung in Bezug auf die Hydroxy-Gruppe des Phenols. Es ist dabei nicht ausgeschlossen, dass in den Molekülen der erfindungsgemäß bevorzugt einzusetzenden ortho-kondensierten Resole auch durch Methylengruppen verknüpfte aromatische Ringe (neben den durch Methylenether-Brücken verknüpften aromatischen Ringen) vorliegen. Ebenso ist dabei nicht ausgeschlossen, dass in den Molekülen der erfindungsgemäß bevorzugt einzusetzenden ortho-kondensierten Resole auch endständige Wasserstoffatome oder endständige Methylgruppen (bei Einsatz von o-Kresol als zusätzlichem Edukt, siehe unten) in ortho-Stellung (neben terminalen Methylolgruppen in ortho-Stellung) vorliegen. Dabei ist in den Molekülen der erfindungsgemäß bevorzugt einzusetzenden ortho-kondensierten Resole das Verhältnis von Methylenether-Brücken zu Methylen-Brücken 1:1 oder größer, und das Verhältnis von terminalen (endständigen) Methylolgruppen in ortho-Stellung zu endständigen Wasserstoffatomen bzw. endständigen Methylgruppen in ortho-Stellung ebenfalls 1:1 oder größer. Derartige Phenolharze werden auch als Benzylether-Harze bezeichnet. Die Struktur derartiger orthokondensierter Resol wird durch die allgemeine Formel (III) dargestellt:

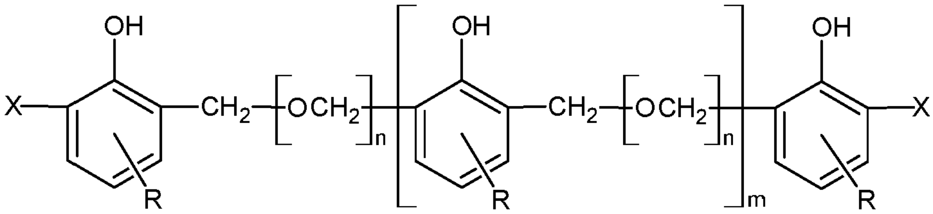

(III)

In Formel (III) ist

- X ausgewählt aus der Gruppe bestehend aus Wasserstoff, der Methylgruppe $CH_3$, der Methylolgruppe $CH_2OH$ und veretherten Methylolgruppen, wobei vorzugsweise mindestens eine der Gruppen X eine Methylolgruppe $CH_2OH$ oder eine veretherte Methylolgruppe ist,

- R Wasserstoff oder ein Substituent in meta- oder para-Stellung zur phenolischen Hydroxy-Gruppe, bevorzugt aus der Gruppe bestehend aus Methyl, n-Butyl, i-Butyl, tert-Butyl, Octyl, Nonyl, Pentadecenyl, Pentadecadienyl und Pentadecatrienyl,

- m ist 1 oder eine ganze Zahl > 1, bevorzugt eine ganze Zahl von 1 bis 10,

- n ist für jede der m+1 Gruppen (IIIa)

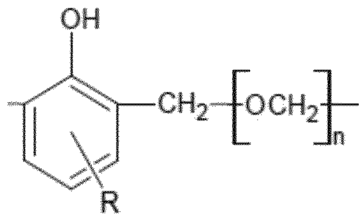

(IIIa)

unabhängig ausgewählt aus 0 und 1, wobei die Anzahl der Gruppen (IIIa) mit n=1 größer ist als die Anzahl der Gruppen (IIIa) mit n=0, oder die Anzahl der Gruppen (IIIa) mit n=1 gleich groß ist wie die Anzahl der Gruppen (IIIa) mit n=0.

Der Begriff "ortho-kondensiertes Resol" bzw. "ortho-kondensiertes phenolisches Resol" (englisch: ortho-condensed phenolic resole) umfasst gemäß dem üblichen fachmännischen Verständnis Verbindungen, wie sie in dem Lehrbuch "Phenolic Resins: A century of progress" (Herausgeber: L. Pilato, Verlag: Springer, Jahr der Veröffentlichung: 2010) insbesondere auf Seite 477 durch Figur 18.22 offenbart sind. Der Begriff umfasst gleichermaßen die im VDG-Merkblatt R 305 "Urethan-Cold-Box-Verfahren" (Februar 1998) unter 3.1.1 angegebenen "Benzyletherharze (Ortho-Phenol-Resole)". Der Begriff umfasst zudem die in EP 1 057 554 B1 offenbarten "Phenolharze des Benzyletherharz-Typs", vgl. dort insbesondere die Absätze [0004] bis [0006].

Ortho-kondensierte Resole sind erhältlich durch Polykondensation von Phenol-Monomeren mit Wasserstoff in der ortho-Stellung und in der ortho'-Stellung in Bezug auf die Hydroxy-Gruppe mit einem molaren Überschuss an Formaldehyd. Zusätzlich zu Phenol-Monomeren mit Wasserstoff in der ortho-Stellung und in der ortho'-Stellung in Bezug auf die Hydroxy-Gruppe kann als weiteres Phenol-Monomer o-Kresol eingesetzt werden. Bevorzugt werden Formaldehyd und Phenol-Monomere im Molverhältnis von größer 1:1 bis 2:1, bevorzugt 1,2:1 bis 1,5:1, in der flüssigen Phase umgesetzt, typischerweise bei einer Temperatur unterhalb von 130 °C katalysiert durch zweiwertige Metallionen (vorzugsweise $Zn^{2+}$) im schwach sauren Medium. Die Herstellung von ortho-kondensierten Resolen bzw. Benzyletherharzen ist im Stand der Technik bekannt, vgl. u.a. EP 1 057 554 B1.

Das Phenolharz e) ist bevorzugt ein ortho-kondensiertes Resol aufweisend

- terminale unveretherte Methylol-Gruppen $-CH_2OH$
  und/oder

- terminale veretherte Methylol-Gruppen $-CH_2OZ$, worin Z

  - ein linearer oder verzweigter Alkylrest mit 1 bis 12 Kohlenstoffatomen ist,

  - oder ein Aralkylrest mit 7 bis 9 Kohlenstoffatomen oder ein Furfurylrest, oder

  - eine Gruppe mit einer Struktur gemäß Formel (IV) ist

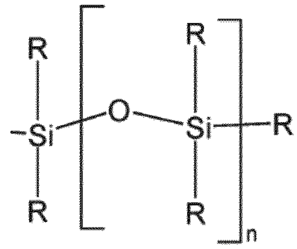

(IV)

wobei in Formel (IV) n eine ganze Zahl ist von 0 bis 20, vorzugsweise von 0 bis 4

und jedes R unabhängig von den anderen R ausgewählt ist aus der Gruppe bestehend aus Hydroxy-Gruppen, Alkoxy-Gruppen mit einem bis 6 Kohlenstoffatomen (bevorzugt Ethoxy-, Propoxy- oder Butoxy-Gruppen) und Gruppen mit einer Resolstruktur gemäß Formel (IIIb)

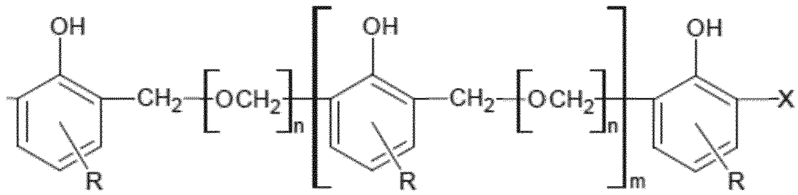

(IIIb)

wobei in Formel (IIIb)

- X Wasserstoff ist oder eine Methylgruppe oder eine Methylolgruppe $CH_2OH$,
- R Wasserstoff ist oder ein Substituent in meta- oder para-Stellung zur phenolischen Hydroxy-Gruppe, bevorzugt aus der Gruppe bestehend aus Methyl, n-Butyl, i-Butyl, tert-Butyl, Octyl, Nonyl, Pentadecenyl, Pentadecadienyl und Pentadecatrienyl,
- m ist 1 oder eine ganze Zahl > 1, bevorzugt eine ganze Zahl von 1 bis 10
- n ist für jede der m+1 Gruppen (IIIa)

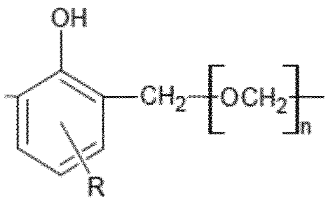

(IIIa)

unabhängig ausgewählt aus 0 und 1, wobei die Anzahl der Gruppen (IIIa) mit n=1 größer ist als die Anzahl der Gruppen (IIIa) mit n=0, oder die Anzahl der Gruppen (IIIa) mit n=1 gleich groß ist wie die Anzahl der Gruppen (IIIa) mit n=0.

Bevorzugt hat in Formel (IV) nur einer, oder keiner der Reste R eine Resolstruktur gemäß Formel (IIIb) wie oben beschrieben.

In einer veretherten terminalen Methylolgruppe wie oben beschrieben ist das Wasserstoffatom, welches in der unveretherten terminalen Methylolgruppe $-CH_2OH$ an das Sauerstoffatom gebunden ist, durch einen Rest Z ersetzt.

Dabei ist in einer ersten bevorzugten Alternative (wie oben angegeben) Z ein linearer oder verzweigter Alkylrest mit 1 bis 12 Kohlenstoffatomen d.h. die Gruppen $-CH_2OZ$ sind Alkoxymethylengruppen. Bevorzugt sind hierbei Alkylreste mit 1 bis 9 Kohlenstoffatomen, bevorzugt aus der Gruppe bestehend aus Methyl, Ethyl, n-Propyl, i-Propyl, n-Butyl, i-Butyl,

tert-Butyl und Ethylhexyl. Derartige Harze sind herstellbar durch Umsetzung der Hydroxy-Gruppen der unveretherten terminalen Methylolgruppen $-CH_2OH$ eines ortho-kondensierten Resols mit primären, sekundären oder tertiären Alkanolen, z.B. Methanol, Ethanol, n-Propanol, i-Propanol, n-Butanol, i-Butanol-, tert-Butanol und Ethylhexylalkohol.

In einer zweiten bevorzugten Alternative (wie oben angegeben) ist Z ein linearer oder verzweigter Aralkylrest (durch Arylgruppen substituierter Alkylrest) mit 5 bis 9 Kohlenstoffatomen, oder ein Furfurylrest. Bevorzugte Reste R sind hierbei Benzyl und Furfuryl. Derartige Harze sind herstellbar durch Umsetzung der der Hydroxy-Gruppen der unveretherten terminalen Methylolgruppen $-CH_2OH$ eines ortho-kondensierten Resols mit Furfurylalkohol oder einem Aralkyl-Alkohol, z.B. Benzylalkohol.

In einer weiteren bevorzugten Alternative hat der Rest Z der veretherten terminalen Methylolgruppe des ortho-kondensierte Resols eine Struktur gemäß Formel (IV) wie oben beschrieben. Bevorzugt ist dabei in Formel (IV) n = 0, einer der Reste R hat eine Resolstruktur gemäß Formel (IIIb) und die anderen Reste sind Ethoxygruppen, oder alle Reste R in Formel (IV) sind Ethoxygruppen. Derartige Resole sind herstellbar durch Umsetzung der unveretherten Hydroxy-Gruppen (d.h. der Hydroxy-Gruppen der unveretherten terminalen Methylolgruppen $-CH_2OH$) eines ortho-kondensierten Resols mit Estern der Orthokieselsäure. Zu Details sei auf die Patentanmeldung WO 2009/130335 verweisen.

Im Phenolharz e) ist das Verhältnis von terminalen Methylol-Gruppen $CH_2OH$ zu veretherten terminalen Methylol-Gruppen $CH_2OZ$ bevorzugt größer als 1, vorzugsweise größer als 2, weiter bevorzugt größer als 4 und besonders bevorzugt größer als 10. Es versteht sich dabei, dass sich diese Verhältnisangabe nicht auf die terminalen Methylolgruppen eines einzelnes Resol-Moleküls bezieht, sondern auf die Gesamtheit der terminalen (veretherten und unveretherten) Methylolgruppen aller Resol-Moleküle in der Phenolharz-Komponente (i). Das Resol e) ist dabei ein Gemisch aus Resol-Molekülen mit zwei veretherten terminalen Methylolgruppen, Resol-Molekülen mit einer veretherten terminalen Methylolgruppe, Resol-Molekülen mit einer unveretherten terminalen Methylolgruppe und Resol-Molekülen mit zwei unveretherten terminalen Methylolgruppen, entsprechend dem gewünschten Verhältnis.

Das Lösemittel f) der Phenolharz-Komponente (i) ist bevorzugt ausgewählt aus der Gruppe bestehend aus

- Dialkylester von $C_4$-$C_6$-Dicarbonsäuren (in der Praxis häufig als "dibasic ester" bezeichnet), bevorzugt aus der Gruppe bestehend aus Dimethyladipat, Dimethylglutarat, und Dimethylsuccinat,

- gesättigte und ungesättigte Fettsäurealkylester, bevorzugt Pflanzenölalkylester, bevorzugt aus der Gruppe bestehend aus Rapsölmethylester, Tallölmethylester, Tall-ölbutylester, Laurinsäuremethylester, Laurinsäureisopropylester, Myristinsäureisopropylester, und Myristinsäureisobutylester,

- Alkylencarbonate, vorzugsweise Propylencarbonat,

- Substanzen aus der Gruppe bestehend aus Cashewnussschalenöl, Komponenten von Cashewnussschalenöl und Derivaten von Cashewnussschalenöl, bevorzugt Cardol, Cardanol sowie Derivate und Oligomere dieser Verbindungen,

- bei 25°C und 101,325 kPa flüssige Kohlenwasserstoffe, bevorzugt aus der Gruppe bestehend aus Cycloalkanen, Alkanen mit 6 bis 22 Kohlenstoffatomen und aromatischen Kohlenwasserstoffen, wobei die aromatischen Kohlenwasserstoffe bevorzugt ausgewählt sind aus der Gruppe bestehend aus Alkylbenzolen, Alkenylbenzolen, Dialkyl-Naphthalinen, Dialkenyl-Naphthalinen,

- Verbindungen aus der Gruppe der Alkylsilane, Alkyl/Alkoxy-Silane, Alkoxysilane, Alkylsiloxane, Alkyl/Alkoxy-Siloxane und Alkoxysiloxane der Formel (I)

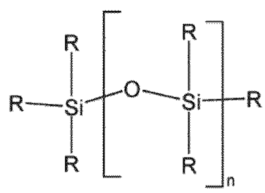

(I)

wobei in Formel (I) n eine ganze Zahl ist von 0 bis 20, und
jedes R unabhängig von den anderen R ausgewählt ist aus der Gruppe der Alkylgruppen mit einem bis 6 Kohlenstoffatomen und der Alkoxygruppen mit einem bis 6 Kohlenstoffatomen

und deren Mischungen.

Verbindungen der Formel (I), in denen n=0 und alle Gruppen R Alkylgruppen sind, sind Alkylsilane. Verbindungen der Formel (I), in denen n=0 und alle Gruppen R Alkoxygruppen sind, sind Alkoxylsilane (auch als Alkylsilikate bezeichnet). Verbindungen der Formel (I), in denen n=0 und eine oder mehrere Gruppen R Alkylgruppen sind, und die restlichen Gruppen R Alkoxygruppen sind, sind Alkyl/Alkoxy-Silane. Verbindungen der Formel (I), in denen n>0 und alle Gruppen R Alkylgruppen sind, sind Alkylsiloxane. Verbindungen der Formel (I), in denen n>0 und alle Gruppen R Alkoxygruppen sind, sind Alkoxylsiloxane. Verbindungen der Formel (I), in denen n>0 und eine oder mehrere Gruppen R Alkylgruppen sind, und die restlichen Gruppen R Alkoxygruppen sind, sind Alkyl/Alkoxy-Siloxane. Bevorzugte Verbindungen der Formel (I) sind Alkoxysilane (Alkylsilikate) (d.h. in Formel (I) ist n=0) und Alkoxysiloxane (Alkylsilikat-Oligomere) worin n eine ganze Zahl ist von 2 bis 5, wobei die Alkoxygruppen bevorzugt Ethoxy-, Propoxy- oder Butoxy-Gruppen sind. Besonders bevorzugt sind Tetraethylorthosilikat (TEOS) und Ethoxysiloxane, worin n eine ganze Zahl ist von 2 bis 5.

Der Begriff "Kohlenwasserstoffe" bezeichnet gemäß seiner auf dem Gebiet der Chemie üblichen Bedeutung organische Verbindungen, die nur aus Kohlenstoff und Wasserstoff bestehen.

Besonders bevorzugt sind Phenolharz-Komponenten (i), in denen

e) das Phenolharz ausgewählt ist aus der Gruppe der ortho-kondensierten Resole wie oben beschrieben, und

f) das Lösemittel ausgewählt ist aus der Gruppe bevorzugter Lösemittel wie oben beschrieben.

In einer besonders bevorzugten Ausführungsform des erfindungsgemäßen Bindemittels enthält die Phenolharz-Komponente (i)

e) ein ortho-kondensiertes Resol, dessen Moleküle jeweils folgende Strukturmerkmale aufweisen

- durch Methylenether-Brücken in ortho, ortho'-Stellung verknüpfte aus Phenol-Monomeren gebildete aromatische Ringe
- terminale Methylol-Gruppen $-CH_2OH$ und/oder terminale AlkoxymethylenGruppen $-CH_2OZ$, worin Z ein Kohlenwasserstoffrest mit 1 bis 12 Kohlenstoff-atomen ist
- pro Molekül mindestens einen aromatischen Ring aus 6 Kohlenstoffatomen, wobei an eines der Kohlenstoffatome des aromatischen Rings eine Hydroxy-Gruppe gebunden ist und an mindestens eines der Kohlenstoffatome des aromatischen Rings ein Kohlenwasserstoffrest gebunden ist, wobei der Kohlenwasserstoffrest 11 bis 26 Kohlenstoffatome enthält und 0 bis 4 Doppelbindungen,

f) ein Lösemittel umfassend Verbindungen aus der Gruppe bestehend aus

- bei 25°C und 101,325 kPa flüssigen Kohlenwasserstoffen, bevorzugt aus der Gruppe bestehend aus Cycloalkanen, Alkanen mit 6 bis 22 Kohlenstoffatomen und aromatischen Kohlenwasserstoffen, wobei die aromatischen Kohlenwasserstoffe bevorzugt ausgewählt sind aus der Gruppe bestehend aus Alkylbenzolen, Alkenylbenzolen, Dialkyl-Naphthalinen, Dialkenyl-Naphthalinen,
- Alkylsilanen, Alkyl/Alkoxy-Silanen, Alkoxysilanen, Alkylsiloxanen, Alkyl/Alkoxy-Siloxanen und Alkoxysiloxanen der Formel (I)

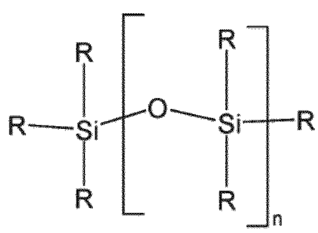

(I)

wobei n eine ganze Zahl ist von 0 bis 20

jedes R unabhängig von den anderen R ausgewählt ist aus der Gruppe der Alkylgruppen mit einem bis 6 Kohlenstoffatomen und Alkoxygruppen mit einem bis 6 Kohlenstoffatomen

in einer Konzentration von 80 % oder mehr, bevorzugt 90 % oder mehr, besonders bevorzugt 95 % oder mehr, bezogen auf die Masse des Lösemittels f).

Zu weiteren Details sei auf die Patentanmeldung WO 2018/113852 A1 verwiesen.

Die Phenolharz-Komponente (i) des erfindungsgemäßen Bindemittelsystems enthält gegebenenfalls weitere Bestandteile.

Vorzugsweise enthält die Phenolharz-Komponente (i) des erfindungsgemäßen Bindemittelsystems eine möglichst geringe Konzentration an
g) molekularem Formaldehyd.

Molekulares Formaldehyd (oft auch als "freies Formaldehyd" bezeichnet) ist Formaldehyd, das nicht im Phenolharz e) gebunden ist, sondern in molekularer Form vorliegt. Der Begriff molekulare Formaldehyd umfasst dabei sowohl monomeres Formaldehyd als auch oligomere und polymere Formen wie Paraformaldehyd (Mischung kurzkettiger, linearer Poly(oxymethylen)e aus 2 oder mehr Monomereinheiten) und 1,3,5-Trioxan. Vorzugsweise beträgt die Konzentration an molekularem Formaldehyd g) weniger als 0,1 %, weiter bevorzugt weniger als 0,08 %, besonders bevorzugt weniger als 0,05 %, wobei die Konzentration jeweils auf die Gesamtmasse der Phenolharz-Komponente (i) bezogen ist.

Die Konzentration des molekular vorliegenden Formaldehyds g) in der Phenolharz-Komponente (i) kann mit der KCN-Methode bestimmt werden. Bei dieser Methode wird die zu untersuchende Probe in einer Mischung aus iso-Propanol und destilliertem Wasser im Mischverhältnis iso-Propanol : $H_2O$ = 3:1 gelöst, und durch Zugabe von Kaliumcyanid im Überschuss wird in der Probe enthaltenes molekulares Formaldehyd quantitativ zu Cyanohydrin umgesetzt. Der Überschuss an Kaliumcyanid wird nachfolgend mit Quecksilber(II)nitrat-Lösung und Diphenylcarbazon als Indikator rücktitriert.

Die KCN-Methode wird bevorzugt gemäß der nachfolgenden detaillierten Beschreibung durchgeführt. Dabei werden folgende Lösungen benötigt:

| | |
|---|---|
| IPA/Wasser | Mischung aus *iso*-Propanol (IPA) (Reinheitsgrad: p.A.) und destilliertem Wasser<br>Mischverhältnis *iso*-Propanol:$H_2O$ = 3:1 |
| KCN-Lösung | Wässrige KCN-Lösung<br>KCN-Konzentration: 0.1 mol/l |
| Phosphat-Puffer-Lösung: | Herstellung:<br>348g $K_2HPO_4$ und 136g $KH_2PO_4$ in einem 1L-Messkolben vorlegen, mit deionisiertem Wasser auf 1 L auffüllen und mischen bis eine klare Lösung entsteht. |
| Borat-Puffer-Lösung: | Herstellung:<br>76,4g $K_2B_4O_7x2H_2O$ (Reinheitsgrad: p.A.) in einem 1L-Messkolben vorlegen, mit deionisiertem Wasser auf 1L auffüllen und mischen bis eine klare Lösung entsteht. |
| $Hg(NO_3)_2$-Lösung: | Wässrige $Hg(NO_3)_2$-Lösung, $Hg(NO_3)_2$-Konzentration: 0.05 mol/l |
| Indikatorlösung: | Lösung von Diphenylcarbazon in Methanol, Diphenylcarbazon-Konzentration: 1 Gew.-% |

Vor jeder Messung muss ein Blindwert bestimmt werden. Hierzu werden in einem 400 ml Becherglas 100 ml "IPA/Wasser" vorgelegt. Es wird mit einem Magnetrührer gemischt und zuerst 40 ml Borat-Puffer-Lösung, dann 20 ml KCN-Lösung zugegeben. Nach zwei Minuten werden 5 ml Phosphat-Puffer-Lösung und 3 bis 5 Tropfen Indikatorlösung zugegeben, so dass eine Färbung der Lösung beobachtet wird. Titriert wird mit einer 0,05 molaren, wässrigen $Hg(NO_3)_2$-Lösung. Der Endpunkt der Titration ist am Farbumschlag nach Violett zu erkennen. Die Farbe sollte nach Erreichen des Endpunktes für mindestens 10 Sekunden stabil sein. Der Verbrauch an 0,05 M $Hg(NO_3)_2$-Lösung wird als "Blindwert" notiert.

Bei der Durchführung der Formaldehyd-Bestimmung ist darauf zu achten, dass die Probeneinwaage entsprechend dem erwarteten Formaldehyd-Gehalt eingestellt wird, und vorzugsweise so gewählt wird, dass für die Titration ca. 10 bis 20 ml 0,05 molare $Hg(NO_3)_2$-Lösung gebraucht werden. Die folgende Tabelle gibt Richtwerte für die zu wählende Probeneinwaage:

| Erwarteter Formaldehyd-Gehalt [%] | Probeneinwaage [g] |
|---|---|
| < 0,05 % | 10 bis 40 g |
| 0,05 bis 0,5% | 3 bis 10 g |
| 0,5 bis 1,0 % | 2 bis 3 g |

Die Probe wird mit Hilfe einer Analysenwaage in einem 400 ml Becherglas eingewogen und in 100 ml "IPA/-Wasser" aufgelöst. Es wird mit einem Magnetrührergemischt und zuerst 40 ml Borat-Puffer-Lösung, dann 20 ml KCN-Lösung zugegeben. Der pH-Wert der Lösung sollte im Bereich um 9,3 liegen. Am Ende einer zweiminütigen Reaktionszeit (gemessen ab dem Moment der Zugabe der KCN-Lösung) werden 5 ml Phosphat-Puffer-Lösung und 3 bis 5 Tropfen Indikatorlösung zugegeben, sodass eine Färbung der Lösung beobachtet wird. Titriert wird mit einer 0,05 molaren, wässrigen $Hg(NO_3)_2$-Lösung. Der Endpunkt der Titration ist am Farbumschlag nach Violett zu erkennen. Die Farbe sollte nach Erreichen des Endpunktes für mindestens 10 Sekunden stabil sein. Der Verbrauch an 0,05 M $Hg(NO_3)_2$-Lösung wird als "Verbrauchswert" notiert.

Die Konzentration an molekularem Formaldehyd g) in [Gew.-%] wird nach der folgenden Formel berechnet:

$$\text{molekulares Formaldehyd [Gew.-\%]} = \frac{(\text{Blindwert [ml]} - \text{Verbrauchswert [ml]}) \times 0{,}294\ \text{[g/ml]}}{\text{Probengewicht [g]}}$$

Die Konzentration an molekularem Formaldehyd g) in der Phenolharz-Komponente (i) kann in ähnlicher Genauigkeit mittels HPLC bestimmt werden, die Bestimmung mittels HPLC ist im Allgemeinen bevorzugt.

Bei der Herstellung der oben beschriebenen bevorzugten Phenolharze e) (ortho-kondensierte Resole) werden wie oben beschrieben Phenol-Monomere mit einem relativ hohen molaren Überschuss an Formaldehyd umgesetzt, so dass neben dem als Produkt erhaltenem Resol e) zwangsläufig hohe Restmengen an molekularem Formaldehyd g) vorliegen. Insbesondere in solchen Fällen ist es bevorzugt, dass der Phenolharz-Komponente (i) des erfindungsgemäßen Bindemittelsystems eine oder mehrere ß-Dicarbonylverbindungen zugesetzt werden, die mit dem molekularem Formaldehyd g) reagieren. Hinsichtlich der Auswahl bevorzugter ß-Dicarbonylverbindungen und deren durch Umsetzen mit molekularem Formaldehyd g) gebildeten Produkten gilt dabei dasselbe wie für die in der erfindungsgemäßen Isocyanat-Komposition enthaltenen ß-Dicarbonylverbindungen b).

Durch Umsetzung mit ß-Dicarbonylverbindung(en) wird in der Phenolharz-Komponente (i) molekulares Formaldehyd zu nichtflüchtigen Reaktionsprodukten gebunden, so dass die Konzentration an molekularem Formaldehyd in der Phenolharz-Komponente (i) reduziert wird. Somit enthält in erfindungsgemäß besonders bevorzugten Bindemittelsystemen die Phenolharz-Komponente (i)

h) durch Umsetzen einer oder mehrerer ß-Dicarbonylverbindungen mit Formaldehyd gebildete Reaktionsprodukte.

Zu Details sei auf die WO 2016/165916 A1 verwiesen.

Durch Zusatz von ß-Dicarbonylverbindungen zur Phenolharz-Komponente (i) wie in der WO 2016/165916 A1 beschrieben lässt sich die Konzentration an molekularem Formaldehyd g) in der Phenolharz-Komponente (i) des erfindungsgemäßen Bindemittelsystems reduzieren. Durch den Einsatz einer Phenolharz-Komponente (i) mit einer geringen Konzentration an molekularem Formaldehyd g) wird gewährleistet, dass so wenig molekulares Formaldehyd g) wie möglich in eine das erfindungsgemäße Bindemittelsystem enthaltende Formstoffmischung und daraus hergestellte Formkörper eingebracht wird. Dies trägt dazu bei, dass beim Verarbeiten der Formstoffmischung und bei der Verwendung daraus hergestellter Formkörper die Emission von Formaldehyd reduziert wird.

Aber auch wenn die Phenolharz-Komponente (i) des Bindemittelsystems nur eine geringe Konzentration an molekularem Formaldehyd g) enthält, ist es nicht zu vermeiden, dass mit diesem Bindemittelsystem hergestellte Formkörper im Laufe der Zeit, insbesondere bei thermischer Belastung, Formaldehyd freizusetzen. Dieses wird durch Umsetzung mit erfindungsgemäß in der Polyisocyanat-Komponente (ii) des erfindungsgemäßen Bindemittelsystems enthaltene(n) β-Dicarbonylverbindung(en) b) zu nichtflüchtigen Reaktionsprodukten gebunden, so dass die Emission von Formaldehyd vermindert wird.

Es ist erfindungsgemäß bevorzugt, dass sowohl die Polyisocyanat-Komponente (ii) als auch die Phenolharz-Komponente (i) des erfindungsgemäßen Bindemittelsystems β-Dicarbonylverbindungen enthält, die in der Lage sind, mit Formaldehyd unter Bildung nichtflüchtiger Verbindungen zu reagieren, so dass die Emission von Formaldehyd vermindert wird.

Bevorzugt werden daher bei der Herstellung der Phenolharz-Komponente (i) eine oder mehrere β-Dicarbonylverbindungen in einem molaren Überschuss relativ zur Gesamtmenge an molekularem Formaldehyd g) zugesetzt. Zu Details sei auf die WO 2016/165916 A1 verwiesen. Somit enthält in erfindungsgemäß besonders bevorzugten Bindemittelsystemen die Phenolharz-Komponente (i)

h) eine oder mehrere β-Dicarbonylverbindungen sowie durch Umsetzen dieser ß-Dicarbonylverbindungen mit Formaldehyd gebildete Reaktionsprodukte, wobei vorzugsweise die Gesamtkonzentration von unreagierten und in Reaktionsprodukten mit Formaldehyd gebundenen β-Dicarbonylverbindungen 0,1 % bis 14 %, vorzugsweise 0,6 % bis 5 % beträgt, wobei die Konzentration jeweils auf die Gesamtmasse der Phenolharz-Komponente (i) bezogen ist.

Bevorzugt sind die in der Phenolharz-Komponente (i) eines erfindungsgemäßen Bindemittelsystems enthaltenen β-Dicarbonylverbindungen h) und die in der Polyisocyanat-Komponente (ii) dieses Bindemittelsystems enthaltenen β-Dicarbonylverbindungen b) ausgewählt sind aus der Gruppe der Dialkylester der Malonsäure (Dialkylmalonate), wobei die Alkylgruppen unabhängig voneinander ausgewählt sind aus Alkylgruppen mit 1 bis 4 Kohlenstoffatomen. Besonders bevorzugt sind Diethylmalonat (Malonsäurediethylester) und Dimethylmalonat (Malonsäuredimethylester). Besonders bevorzugt sind die in der Phenolharz-Komponente (i) eines erfindungsgemäßen Bindemittelsystems enthaltenen β-Dicarbonylverbindungen h) identisch mit den in der Polyisocyanat-Komponente (ii) dieses Bindemittelsystems enthaltenen ß-Dicarbonylverbindungen b).

Vorzugsweise enthält die Phenolharz-Komponente (i) des erfindungsgemäßen Bindemittelsystems eine möglichst geringe Konzentration an

i) monomeren Verbindungen aus der Gruppe der Phenole.

Monomere Verbindungen aus der Gruppe der Phenole sind Phenol-Monomere, die nicht im Phenolharz e) gebunden sind, sondern in monomerer Form vorliegen. Wenn die Phenolharz-Komposition (i) monomere Verbindungen i) aus der Gruppe der Phenole enthält, so sind dies meist bei der Phenolharz-Herstellung nicht umgesetzte Restmengen an Phenol-Monomeren. Daher sind die ggf. in einer Phenolharz-Komposition (i) enthaltenen monomeren Verbindungen i) aus der Gruppe der Phenole üblicherweise identisch mit denjenigen Phenol-Monomeren, welche im Phenolharz e) dieser Phenolharz-Komposition (i) durch Methylen-Brücken oder Methylenether-Brücken verbundenen sind.

Vorzugsweise beträgt die Konzentration an monomeren Verbindungen aus der Gruppe der Phenole i) 10 % oder weniger, bevorzugt 5 % oder weniger, besonders bevorzugt 1 % oder weniger, wobei die Konzentration jeweils auf die Gesamtmasse der Phenolharz-Komponente (i) bezogen ist.

Wenn die Phenolharz-Komponente (i) des erfindungsgemäßen Bindemittelsystems ein Resol als Phenolharz e) enthält, dann enthält die Phenolharz-Komponente (i) meist auch j) eine oder mehrere Verbindungen aus der Gruppe der Hydroxybenzylalkohole.

Verbindungen aus der Gruppe der Hydroxybenzylalkohole j) sind insbesondere Saligenin (2-Hydroxybenzylalkohol, o-Hydroxybenzylalkohol) und Homosaligenin (4-Hydoxybenzylalkohol, p-Hydroxybenzylalkohol). Diese entstehen bei der Herstellung von Phenolharzen durch Addition eines Moleküls Formaldehyd an ein Molekül Phenol (Hydroxybenzen). Zu Details sei auf die DE 10 2016 125 700 A1 verwiesen.

Vorzugsweise ist in der Phenolharz-Komponente (i) des erfindungsgemäßen Bindemittelsystems die Konzentration an Verbindungen aus der Gruppe der Hydroxybenzylalkohole j) höher als die Konzentration an monomerem Phenol (monomerem Hydroxybenzen). Bevorzugt ist das Massenverhältnis der Verbindungen j) aus der Gruppe der Hydroxybenzylalkohole zu monomerem Phenol (Hydroxybenzen) größer oder gleich 1,2, bevorzugt 1,2 bis 30, und/oder das Massenverhältnis von Saligenin zu Phenol (Hydroxybenzen) ist größer oder gleich 1,1 bevorzugt 1,1 bis 25, wobei bevorzugt die Konzentration an monomerem Phenol jeweils kleiner ist als 2,5 %, bevorzugt kleiner als 2 %, wobei die Konzentrationen jeweils auf die Gesamtmasse der Phenolharz-Komponente (i) bezogen sind.

In einigen Fällen werden der Phenolharz-Komponente (i) des erfindungsgemäßen Bindemittelsystems

k) ein oder mehrere Silane

zugesetzt.

In einigen Fällen enthält die Phenolharz-Komponente (i) des erfindungsgemäßen Bindemittelsystems

l) Flusssäure

Flusssäure bewirkt eine verbesserte Feuchteresistenz der Gießereiformen und Gießereikerne insbesondere, wenn Flusssäure zusammen mit Silanen k) eingesetzt wird.

Besonders bevorzugt sind Bindemittelsysteme, wobei die Phenolharz-Komponente (i)

e) ein ortho-kondensierten Resol gemäß Formel (III) wie oben beschrieben

f) ein Lösemittel ausgewählt aus der Gruppe bevorzugter Lösemittel wie oben beschrieben

h) eine oder mehrere β-Dicarbonylverbindungen sowie durch Umsetzen dieser ß-Dicarbonylverbindungen mit

Formaldehyd gebildete Reaktionsprodukte

enthält.

In einer bevorzugten Ausführungsform des erfindungsgemäßen Bindemittelsystems umfasst eine oder umfassen beide der Komponenten (i) und (ii) weiterhin

m) ein oder mehrere Silikontenside umfassend pro Molekül mindestens eine Struktureinheit $-Si(C_nH_{2n+1})_2-O-$, wobei n eine ganze Zahl von 1 bis 3 ist, und mindestens eine Polyalkoxy-Gruppe

wobei die Konzentration der Silikontenside m) bevorzugt 0,001 % bis 1,0 % beträgt, bevorzugt von 0,001 % bis 0,8 % und insbesondere bevorzugt von 0,002 % bis 0,5 %, bezogen auf die Summe der Masse der Komponente (i) und der Masse der Komponente (ii). Hinsichtlich bevorzugter Silikontenside sei auf die EP 3 333 205 A1 verwiesen. Unabhängig davon, ob nur die Phenolharz-Komponente (i), oder nur die Polyisocyanat-Komponente (ii) oder beide Komponenten (i) und (ii) Silikontenside m) umfassen, beträgt die Konzentration der Silikontenside m) bevorzugt 0,001 % bis 1,0 %, weiter bevorzugt 0,001 % bis 8 % und insbesondere bevorzugt von 0,002% % bis 0,5 %, bezogen auf die Summe der Massen der Komponente (i) und der Komponente (ii).

Ein dritter Aspekt der vorliegenden Erfindung betrifft ein Verfahren umfassend die Schritte:

- Herstellen einer Formstoffmischung durch Vermischen der Phenolharz-Komponente (i) und der Polyisocyanat-Komponente (ii) eines Bindemittelsystems gemäß dem zweiten Aspekt der Erfindung wie oben beschrieben mit einem Formgrundstoff und optional weiteren Bestandteilen der herzustellenden Formstoffmischung, so dass eine Formstoffmischung umfassend die Phenolharz-Komponente (i) und die Polyisocyanat-Komponente (ii) eines Bindemittelsystems gemäß dem zweiten Aspekt der Erfindung wie oben beschrieben und einen Formgrundstoff gebildet wird,

- Formen der Formstoffmischung,

- Härten des Bindemittelsystems in der geformten Formstoffmischung, wobei ein Formkörper gebildet wird.

Bei dem erfindungsgemäßen Verfahren kann der durch Härten des Bindemittelsystems in der geformten Formstoffmischung gebildete Formkörper einer weiteren Bearbeitung unter Wärmezufuhr unterzogen werden, bzw. das erfindungsgemäße Verfahren kann einen weiteren Bearbeitungsschritt umfassen, der eine thermische Behandlung des durch Härten des Bindemittelsystems in der geformten Formstoffmischung gebildeten Formkörpers umfasst.

Die bei dem erfindungsgemäßen Verfahren herzustellende Formstoffmischung umfasst

- die Komponenten (i) und (ii) eines Bindemittelsystems gemäß dem oben beschriebenen zweiten Aspekt der vorliegenden Erfindung

- und einen Formgrundstoff

- und optional weitere Bestandteile,

wobei die Gesamtkonzentration der Komponenten (i) und (ii) des Bindemittelsystems gemäß dem oben beschriebenen zweiten Aspekt der vorliegenden Erfindung üblicherweise 0.6 % bis 14 % beträgt, bezogen auf die Gesamtmasse der Formstoffmischung.

In Formstoffmischungen für die Herstellung von Gießereikernen bzw. Gießereiformen beträgt die Gesamtkonzentration der Komponenten (i) und (ii) des Bindemittelsystems gemäß dem oben beschriebenen zweiten Aspekt der vorliegenden Erfindung üblicherweise 0,6 % bis 3%, vorzugsweise 0,8 % bis 2%, besonders bevorzugt 1,0 % bis 1,6%, bezogen auf die Gesamtmasse der Formstoffmischung.

In Formstoffmischungen für die Herstellung von Speisern beträgt die Gesamtkonzentration der Komponenten (i) und (ii) des Bindemittelsystems gemäß dem oben beschriebenen zweiten Aspekt der vorliegenden Erfindung üblicherweise 8 % bis 14 %, vorzugsweise 10 % bis 12 %, bezogen auf die Gesamtmasse der Formstoffmischung.

In der bei dem erfindungsgemäßen Verfahren herzustellenden Formstoffmischung liegt das stöchiometrische Verhältnis von Isocyanat-Gruppen in der Polyisocyanat-Komponente (ii) zu Hydroxy-Gruppen in der Phenolharz-Komponente (i) vorzugsweise im Bereich von 0,5 bis 1,5, weiter bevorzugt im Bereich von 0,6 bis 1,4, mehr bevorzugt im Bereich von 0,7 bis 1,3, besonders bevorzugt im Bereich von 0,8 bis 1,2, ganz besonders bevorzugt im Bereich von 0,9

bis 1,1, speziell bevorzugt im Bereich von 0,95 bis 1,05. Während es in vielen Fällen bevorzugt ist, dass das stöchiometrische Verhältnis von Isocyanat-Gruppen in der Polyisocyanat-Komponente (ii) zu Hydroxy-Gruppen in der Phenolharz-Komponente (i) nahe 1 ist, gibt es auch Fälle, in denen es vorteilhaft ist, dass ein Überschuss an Isocyanat-Gruppen relativ zu den Hydroxy-Gruppen vorliegt, und auch Fälle, in denen es vorteilhaft ist, dass ein Überschuss an Hydroxy-Gruppen relativ zu Isocyanat-Gruppen vorliegt.

Der Begriff Formgrundstoff umfasst sowohl einzelne als Formgrundstoff geeignete Materialien als auch als Formgrundstoff geeignete Gemische verschiedener Materialien.

Als Formgrundstoffe sind alle üblicherweise für die Herstellung von Speisern, Gießereiformen und Gießereikernen eingesetzten Formgrundstoffe geeignet, z.B. Quarzsand und Spezialsande. Der Begriff Spezialsand umfasst natürliche Mineralsande sowie Sinter- und Schmelzprodukte, die in körniger Form hergestellt bzw. durch Brech-, Mahl- und Klassiervorgänge in körnige Form überführt werden, bzw. durch andere physikalisch-chemische Vorgänge entstandene anorganische Mineralsande, die als Formgrundstoffe mit gießereiüblichen Bindemitteln für die Fertigung von Speisern, Kernen und Formen verwendet werden. Spezialsande umfassen u.a.

- Aluminiumsilicate in Form natürlicher Minerale oder Mineralgemische wie J-Sand und Kerphalite KF,
- Aluminiumsilicate in Form technischer Sinterkeramik wie z.B. Schamotte und Cerabeads,
- natürliche Schwerminerale wie R-Sand, Chromitsand und Zirkonsand,
- technische Oxidkeramik wie M-Sand und Bauxitsand,
- sowie technische Nichtoxid-Keramik wie Siliciumcarbid.

Formstoffmischungen für die Herstellung von Speisern werden auch als Speisermassen bezeichnet. Eine erfindungsgemäße Speisermasse umfasst neben den Komponenten (i) und (ii) eines Bindemittelsystems gemäß dem oben beschriebenen zweiten Aspekt der vorliegenden Erfindung und einen Formgrundstoff typischerweise isolierend wirkende Füllstoffe wie Mikrohohlkugeln, gegebenenfalls Fasermaterial, sowie im Falle exothermer Speiser ein oxidierbares Metall und ein Oxidationsmittel für das oxidierbare Metall. Die Herstellung von Speisern nach dem Polyurethan-Cold-Box-Verfahren sowie als Speiserbestandteile geeignete Materialien sind dem Fachmann bekannt, siehe z.B. WO 2008/113765 und DE 10 2012 200 967.

Sofern die in die Formstoffmischung eingebrachte Phenolharz-Komponente (i) molekulares Formaldehyd g) enthält, reagiert dieses mit der oder den durch die Polyisocyanat-Komponente (ii) des erfindungsgemäßen Bindemittelsystems eingebrachten *ß*-Dicarbonylverbindungen b) zu nichtflüchtigen Reaktionsprodukten, so dass Emissionen von molekularem Formaldehyd g) aus der Formstoffmischung vermindert werden.

Da es nicht auszuschließen ist, dass der im erfindungsgemäßen Verfahren aus der Formstoffmischung hergestellte Formkörper bei seiner weiteren Bearbeitung oder bei seiner Verwendung weiteres molekulares Formaldehyd freisetzt, ist es vorteilhaft, wenn die bei dem erfindungsgemäßen Verfahren hergestellte Formstoffmischung neben den durch Umsetzen der *ß*-Dicarbonylverbindungen b) mit molekularem Formaldehyd g) aus der Phenolharz-Komponente (i) gebildeten Reaktionsprodukten auch unreagierte *ß*-Dicarbonylverbindungen b) enthält. Dazu wird die Konzentration der mit der Polyisocyanat-Komponente (ii) in die Formstoffmischung eingebrachten $\beta$-Dicarbonylverbindungen b) so eingestellt, dass ein molarer Überschuss vorliegt relativ zu der mit der Phenolharz-Komponente (i) in die Formstoffmischung eingebrachten Menge an molekularem Formaldehyd g). Hinsichtlich bevorzugter $\beta$-Dicarbonylverbindungen b) gelten die obenstehenden Ausführungen zum ersten Aspekt der vorliegenden Erfindung.

Das Formen der Formstoffmischung erfolgt üblicherweise, indem die Formstoffmischung in ein Formwerkzeug gefüllt, geblasen oder geschossen wird und danach gegebenenfalls verdichtet wird.

Das Härten des Bindemittelsystems in der geformten Formstoffmischung erfolgt vorzugsweise ohne Wärmezufuhr. Dazu wird zum Härten des Bindemittelsystems die geformte Formstoffmischung kontaktiert

- mit einem gasförmigen tertiären Amin oder mit einer Mischung aus zwei oder mehreren gasförmigen tertiären Aminen oder
- mit einem flüssigen tertiären Amin oder mit einer Mischung aus zwei oder mehreren flüssigen tertiären Aminen.

Das Härten eines Bindemittels umfassend eine Phenolharz-Komponente (i) und eine Polyisocyanat-Komponente (ii) in Gegenwart eines gasförmigen tertiären Amins oder einer Mischung aus zwei oder mehreren gasförmigen tertiären Aminen ist im Stand der Technik als Polyurethan-Cold-Box-Verfahren bekannt, das Härten eines Bindemittels umfassend eine Phenolharz-Komponente (i) und eine Polyisocyanat-Komponente (ii) in Gegenwart eines flüssigen tertiären Amins oder einer Mischung aus zwei oder mehreren flüssigen tertiären Aminen als Polyurethan-No-Bake-Verfahren.

Das tertiäre Amin ist vorzugsweise ausgewählt aus der Gruppe bestehend aus Triethylamin, Dimethylethylamin, Diethylmethylamin, Dimethylisopropylamin, Dimethylpropylamin und deren Mischungen. Die einzusetzenden tertiären Amine sind bei Raumtemperatur flüssig und werden für den Einsatz im Polyurethan-Cold-Box-Prozess durch Wärmezufuhr verdampft, und das verdampfte tertiäre Amin wird - gegebenenfalls mittels eines Trägergasstroms - in das Formwerkzeug eingesprüht oder injiziert.

Grundsätzlich ist es auch möglich, das erfindungsgemäße Bindemittelsystem durch Wärmezufuhr zu härten. Entsprechende Technologien sind dem Fachmann bekannt (z.B. das Hot-Box-Verfahren). Eine Härtung des Bindemittelsystems unter Wärmezufuhr ist jedoch erfindungsgemäß nicht bevorzugt.

Der in dem erfindungsgemäßen Verfahren hergestellte Formkörper enthält einen Formgrundstoff gebunden durch ein Polyurethan, welches durch Härten eines Bindemittelsystems gemäß dem zweiten Aspekt der vorliegenden Erfindung gebildet worden ist. Der bei dem erfindungsgemäßen Verfahren hergestellte Formkörper enthält weiterhin eine oder mehrere β-Dicarbonylverbindungen b) und/oder durch Umsetzen dieser β-Dicarbonylverbindungen b) mit Formaldehyd gebildete Reaktionsprodukte. Derartige Reaktionsprodukte entstehen bei dem erfindungsgemäßen Verfahren zum einen dann, wenn bei der Herstellung der Formstoffmischung durch die Phenolharz-Komponente (i) molekulares Formaldehyd g) eingetragen wird, und zum anderen insbesondere dann, wenn das Bindemittelsystem in der geformten Formstoffmischung unter Wärmezufuhr gehärtet wird (was erfindungsgemäß jedoch nicht bevorzugt ist) sowie wenn der durch Härten des Bindemittelsystems in der geformten Formstoffmischung gebildete Formkörper einer weiteren Bearbeitung unter Wärmezufuhr unterzogen wird (zu Details siehe unten). Daher ist es bevorzugt, dass der durch Härten des Bindemittelsystems gebildete Formkörper neben gegebenenfalls durch Umsetzen der *ß*-Dicarbonylverbindungen b) mit molekularem Formaldehyd g) aus der Phenolharz-Komponente (i) gebildeten Reaktionsprodukten auch unreagierte *ß*-Dicarbonylverbindungen b) enthält, welche bei einer weiteren Bearbeitung des Formkörpers entstehendes Formaldehyd durch Bildung nichtflüchtiger Reaktionsprodukte binden, so dass die Emission von Formaldehyd aus dem Formkörper vermindert wird. Hinsichtlich bevorzugter *ß*-Dicarbonylverbindungen b) gelten die obenstehenden Ausführungen zum ersten Aspekt der vorliegenden Erfindung.

In einer ersten Version des erfindungsgemäßen Verfahrens ist der durch Härten des Bindemittelsystems in der geformten Formstoffmischung gebildete Formkörper ein Artikel aus der Gruppe bestehend aus Speisern, Gießereiformen und Gießereikernen, d.h. der durch das erfindungsgemäßen Verfahren erhaltene Formkörper ist ohne weitere Bearbeitungsschritte als Gießereikern, als Gießereiform oder als Speiser einsetzbar. Gießereikerne, Gießereiformen und Speiser, ihre Ausgestaltung, Funktionsweise und Verwendung sind dem Fachmann bekannt.

In einer zweiten Version des erfindungsgemäßen Verfahrens werden mehrere Formkörper gebildet und zu einem Artikel aus der Gruppe bestehend aus Gießereiformen und Gießereikernen oder Kombinationen einer Gießform mit einem Kern oder mit mehreren Kernen zusammengesetzt. Derartige aus mehreren Formkörpern zusammengesetzte Artikel werden auch als Kernpakete bezeichnet. Derartige zusammengesetzte Gießereiformen und Gießereikerne oder Kombinationen einer Gießereiform mit einem oder mehreren Kernen werden insbesondere zur Herstellung von Gussstücken mit komplexer Geometrie benötigt. Die miteinander zu verbindenden Formkörper werden dazu ineinandergesteckt, in besonderen Fällen auch miteinander verklebt oder verschraubt.

In einer weiteren Version des erfindungsgemäßen Verfahrens wird der durch Härten des Bindemittelsystems in der geformten Formstoffmischung gebildete Formkörper weiteren Bearbeitungsschritten unterzogen, um einen Gießereikern, eine Gießereiform oder einen Speiser zu bilden, wobei der Gießereikern, eine Gießereiform oder einen Speiser den durch Härten des Bindemittelsystems in der geformten Formstoffmischung gebildeten Formkörper umfasst.

In einer bevorzugten ersten speziellen Variante des erfindungsgemäßen Verfahrens besteht der weitere Bearbeitungsschritt darin, dass ein durch Härten des Bindemittelsystems in der geformten Formstoffmischung gebildeter Formkörper mit einer Beschichtung versehen wird. In dieser ersten speziellen Variante umfasst das erfindungsgemäße Verfahren die weiteren Schritte

- Auftragen einer Beschichtungszusammensetzung umfassend in einer Trägerflüssigkeit dispergierte Partikel eines oder mehrerer Feuerfeststoffe auf den Formkörper, wobei ein beschichteter Formkörper gebildet wird, dessen Oberfläche mit der Beschichtungszusammensetzung versehene Bereiche aufweist,

- thermische Behandlung des beschichteten Formkörpers bei einer Temperatur oberhalb von 40 °C, vorzugsweise im Bereich von 50 °C bis 200 °C, wobei ein Artikel aus der Gruppe bestehend aus Gießereiformen und Gießereikernen gebildet wird, dessen Oberfläche Bereiche aufweist, in denen ein Partikel eines oder mehrerer Feuerfeststoffe umfassender Überzug angeordnet ist.

Beschichtungszusammensetzungen umfassend in einer Trägerflüssigkeit dispergierte Partikel eines oder mehrerer Feuerfeststoffe werden auch als Schlichtezusammensetzungen bezeichnet. Derartige Schlichtezusammensetzungen sind im Stand der Technik bekannt und werden z.B. in der Patentanmeldung WO 2011/003637 A1 beschrieben.

Die daraus gebildeten Überzüge werden auch als Schlichteüberzüge oder Schlichten bezeichnet.

Als "feuerfest" werden im Einklang mit dem üblichen fachmännischen Verständnis (vgl. DIN 51060:2000-06) Massen, Werkstoffe und Mineralien bezeichnet, die zumindest kurzzeitig der Temperaturbelastung beim Abguss bzw. bei der Erstarrung einer Eisenschmelze, meist Gusseisen, widerstehen können. Als "hochfeuerfest" werden Massen, Werkstoffe und Mineralien bezeichnet, die kurzzeitig der Gießhitze einer Stahlschmelze widerstehen können. Die Temperaturen, die beim Abguss von Stahlschmelzen auftreten können, liegen meist höher als die Temperaturen, welche beim Abguss von Eisen- bzw. Gusseisenschmelzen auftreten können. Feuerfeste Massen, Werkstoffe und Mineralien (Feuerfeststoffe) und hochfeuerfeste Massen, Werkstoffe und Mineralien sind dem Fachmann bekannt, beispielsweise aus der DIN 51060:2000-06. Sofern nicht anders angegeben, weisen pulverförmige Feuerfeststoffe dann eine mittlere Korngröße (vorzugsweise gemessen mittels Lichtstreuung nach ISO 13320:2009-10) im Bereich von 0,1 $\mu$m bis 500 $\mu$m, bevorzugt im Bereich von 1 $\mu$m bis 200 $\mu$m, auf. Als Feuerfeststoffe sind insbesondere solche Materialien geeignet, welche Schmelzpunkte aufweisen, die zumindest 200 °C oberhalb der Temperatur der jeweils eingesetzten Metallschmelze liegen und/oder die keine Reaktion mit der Metallschmelze eingehen. Der Begriff "Feuerfeststoff" wie hier verwendet umfasst auch hochfeuerfeste Stoffe.

Die Feuerfeststoffe sind ausgewählt aus jenen Feuerfeststoffen, die üblicherweise in Schlichten eingesetzt werden, z.B. Feuerfeststoffe ausgewählt aus der Gruppe bestehend aus Quarz, Aluminiumoxid, Zirkoniumdioxid, Aluminiumsilikaten, nicht quellbaren Schichtsilikaten, Zirkoniumsilikaten, Olivin, Talk, Glimmer, Graphit, Koks, Feldspat, Diatomit, Kaoline, kalzinierte Kaoline, Metakaolinit, Eisenoxid und Bauxit.

Zusammensetzungen zur Herstellung von Schlichteüberzügen enthalten häufig weitere Bestandteile wie Netzmittel, rheologische Additive, Bindemittel, Stellmittel und/oder Biozide. Geeignete Netzmittel, rheologische Additive, Bindemittel, Stellmittel und Biozide und deren Funktion und Wirkung sind dem Fachmann bekannt.

Die Trägerflüssigkeit dient lediglich als Vehikel zum Auftragen der in ihr suspendierten und gelösten Stoffe auf den Formkörper, und wird durch thermische Behandlung des beschichteten Formkörpers entfernt. Die Trägerflüssigkeit liegt unter Normalbedingungen (25 °C und 1013,25 hPa) flüssig vor und ist unter Normaldruck (1013,25 hPa) bei Temperaturen oberhalb von 40 °C, vorzugsweise im Bereich von 50 °C bis 200 °C, verdampfbar. Die Trägerflüssigkeit ist bevorzugt ausgewählt ist aus der Gruppe bestehend aus Wasser, Methanol, Ethanol und Isopropanol.

Das Auftragen der Beschichtungszusammensetzung auf den Formkörper erfolgt üblicherweise durch ein Verfahren ausgewählt aus der Gruppe bestehend aus Sprühen, Tauchen, Fluten und Streichen, vorzugsweise Tauchen.

Durch die thermische Behandlung des beschichteten Formkörpers bei einer Temperatur oberhalb von 40 °C, vorzugsweise im Bereich von 50 °C bis 200 °C wird die Trägerflüssigkeit aus der aufgetragenen Beschichtungszusammensetzung entfernt. Der dabei entstehende Überzug, welcher Partikel eines oder mehrerer Feuerfeststoffe umfasst, bildet eine Oberfläche der Gießereiform oder des Gießereikerns, die beim Gießvorgang mit einer Metallschmelze in Kontakt kommt.

Bei thermischer Belastung des durch Härten des Bindemittelsystems in der geformten Formstoffmischung gebildeten Formkörpers entsteht häufig molekulares Formaldehyd. Wenn der durch Härten des Bindemittelsystems in der geformten Formstoffmischung gebildete Formkörper bei dem erfindungsgemäßen Verfahren einem weiteren Bearbeitungsschritt unterzogen werden soll, der eine thermische Behandlung umfasst wie z.B. in der oben beschriebenen ersten speziellen Variante des erfindungsgemäßen Verfahrens, dann ist es bevorzugt, dass der durch Härten des Bindemittelsystems in der geformten Formstoffmischung gebildete Formkörper eine oder mehrere *ß*-Dicarbonylverbindungen b) enthält, welche bei seiner weiteren Bearbeitung entstehendes Formaldehyd durch Bildung nichtflüchtiger Reaktionsprodukte binden, so dass die Emission von Formaldehyd vermindert wird.

Besonders bevorzugt wird in der oben beschriebenen ersten speziellen Variante des erfindungsgemäßen Verfahrens eine Beschichtungszusammensetzung eingesetzt, welche in einer Trägerflüssigkeit dispergierte Partikel eines oder mehrerer Feuerfeststoffe sowie eine oder mehrere Verbindungen enthält, die in der Lage sind, durch Umsetzung mit Formaldehyd nichtflüchtige Verbindungen zu bilden, so dass die Emission von Formaldehyd bei der thermischen Behandlung zur Entfernung der Trägerflüssigkeit der Beschichtungszusammensetzung weiter reduziert wird. Derartige Beschichtungszusammensetzungen, sowie ihre Herstellung, Anwendung und Wirkung sind in der nicht vorveröffentlichten Patentanmeldung DE 10 2018 118 291.0 des Anmelders der vorliegenden Patentanmeldung beschrieben.

Besonders bevorzugt wird in der oben beschriebenen ersten speziellen Variante des erfindungsgemäßen Verfahrens eine Beschichtungszusammensetzung eingesetzt, welche einen oder mehrere Formaldehydfänger enthält aus der Gruppe bestehend aus

- $\beta$-Dicarbonylverbindungen
- zwei- und dreiwertige Phenole
- Phenol-Formaldehyd-Novolake und Resorcin-Formaldehyd-Novolake

- Aminosäuren
- primäre und sekundäre Aminosilane
- Alkalimetall-Hydrogensulfite
- Melamin, Benzoguanamin, Harnstoff und deren Derivate
- Hydrazin und Carbonohydrazid und deren Derivate
- primäre und sekundäre Amine
- Baumharze, Tannine und Lignine.

Bei der thermischen Behandlung des beschichteten Formkörpers entstehendes Formaldehyd wird durch die in der aufgetragenen Beschichtungszusammensetzung enthaltenen Formaldehydfänger unter Bildung nichtflüchtiger Reaktionsprodukte gebunden, so dass der aus der Beschichtungszusammensetzung gebildete Überzug durch Umsetzung des in der Beschichtungszusammensetzung enthaltenen Formaldehydfängers mit Formaldehyd gebildete Reaktionsprodukte enthält.

Um eine größtmögliche Reduktion der Emission von Formaldehyd zu erreichen, ist es erfindungsgemäß bevorzugt, dass bei dem erfindungsgemäßen Verfahren

- zur Herstellung der Formstoffmischung ein erfindungsgemäßes Bindemittelsystem eingesetzt wird, dessen Phenolharz-Komponente (ii)

  g) molekulares Formaldehyd in einer Konzentration von weniger als 0,1 %, weiter bevorzugt weniger als 0,08 %, besonders bevorzugt weniger als 0,05 %,

  h) und eine oder mehrere β-Dicarbonylverbindungen enthält

  wobei die Konzentration jeweils auf die Gesamtmasse der Phenolharz-Komponente (i) bezogen ist

  und

- die Konzentration der mit der Polyisocyanat-Komponente (ii) in die Formstoffmischung eingebrachten ß-Dicarbonylverbindungen b) so eingestellt wird, dass ein molarer Überschuss vorliegt relativ zu der mit der Phenolharz-Komponente (i) in die Formstoffmischung eingebrachten Menge an molekularem Formaldehyd g)
  und

- zur Herstellung des Überzugs eine Beschichtungszusammensetzung verwendet wird, welche eine oder mehrere Verbindungen enthält, die in der Lage sind, durch Umsetzung mit Formaldehyd nichtflüchtige Verbindungen zu bilden.

Eine bevorzugte zweite spezielle Variante des erfindungsgemäßen Verfahrens umfasst die Schritte

- Herstellen einer Formstoffmischung durch Vermischen der Phenolharz-Komponente (i) und der Polyisocyanat-Komponente (ii) eines Bindemittelsystems gemäß dem zweiten Aspekt der Erfindung wie oben beschrieben mit einem Formgrundstoff und optional weiteren Bestandteilen der herzustellenden Formstoffmischung, so dass eine Formstoffmischung umfassend die Phenolharz-Komponente (i) und die Polyisocyanat-Komponente (ii) eines Bindemittelsystems gemäß dem zweiten Aspekt der Erfindung wie oben beschrieben und einen Formgrundstoff gebildet wird,
- Herstellen eines Formkörpers durch Formen der Formstoffmischung und Härten des Bindemittelsystems in der der geformten Formstoffmischung,
- Auftragen einer Beschichtungszusammensetzung umfassend in einer Trägerflüssigkeit dispergierte Partikel eines oder mehrerer Feuerfeststoffe auf den Formkörper, wobei ein beschichteter Formkörper gebildet wird, dessen Oberfläche mit der Beschichtungszusammensetzung versehene Bereiche aufweist,

- Verbinden des beschichteten Formkörpers mit einem, oder mehreren weiteren Formkörpern, die durch Formen der o.g. Formstoffmischung oder einer anderen Formstoffmischung und Härten des Bindemittelsystems in der der geformten Formstoffmischung hergestellt worden sind, zu einem zusammengesetzten Formkörper,

- thermische Behandlung des zusammengesetzten Formkörpers bei einer Temperatur oberhalb von 40 °C, vorzugsweise im Bereich von 50 °C bis 200 °C, wobei ein Artikel aus der Gruppe bestehend aus Gießereiformen und Gießereikernen und Kombinationen einer Gießform mit Kernen erhalten wird, dessen Oberfläche Bereiche aufweist, in denen ein Partikel eines oder mehrerer Feuerfeststoffe umfassender Überzug angeordnet ist.

Bei dieser zweiten speziellen Variante erfindungsgemäßen Verfahren werden mehrere Formkörper hergestellt, die dafür vorgesehen sind, zu einem Artikel aus der Gruppe bestehend aus Gießereiformen und Gießereikernen oder Kombinationen einer Gießform mit einem Kern oder mit mehreren Kernen zusammengesetzt zu werden. Mindestens einer dieser Formkörper wird hergestellt durch Formen einer Formstoffmischung enthaltend die Komponenten (i) und (ii) eines Bindemittelsystems gemäß dem oben beschriebenen zweiten Aspekt der vorliegenden Erfindung und Härten des Bindemittelsystems in der geformten Formstoffmischung. Auf diesen Formkörper wird eine Beschichtungszusammensetzung umfassend in einer Trägerflüssigkeit dispergierte Partikel eines oder mehrerer Feuerfeststoffe aufgetragen, wobei ein beschichteter Formkörper gebildet wird, dessen Oberfläche mit der Beschichtungszusammensetzung versehene Bereiche aufweist. Für die Herstellung der weiteren Formkörper wird dieselbe Formstoffmischung oder eine andere Formstoffmischung verwendet. Diese andere Formstoffmischung kann ein nicht-erfindungsgemäßes Bindemittelsystem enthalten. Auf einen, mehrere oder alle weiteren Formkörper kann eine Beschichtungszusammensetzung umfassend in einer Trägerflüssigkeit dispergierte Partikel eines oder mehrerer Feuerfeststoffe aufgetragen werden, wobei ein beschichteter Formkörper gebildet wird, dessen Oberfläche mit der Beschichtungszusammensetzung versehene Bereiche aufweist. Anschließend werden die hergestellten Formkörper, unter denen mindestens ein aus einer Formstoffmischung mit einem erfindungsgemäßen Bindemittelsystem hergestellter beschichteter Formkörper ist, zu einem zusammengesetzten Formkörper verbunden.

Durch die thermische Behandlung des zusammengesetzten Formkörpers bei einer Temperatur oberhalb von 40 °C, vorzugsweise im Bereich von 50 °C bis 200 °C wird die Trägerflüssigkeit aus der aufgetragenen Beschichtungszusammensetzung entfernt. Der dabei entstehende Überzug, welcher Partikel eines oder mehrerer Feuerfeststoffe umfasst, bildet eine Oberfläche der Gießereiform oder des Gießereikerns, die beim Gießvorgang mit einer Metallschmelze in Kontakt kommt.

Bevorzugt wird auch in dieser zweiten speziellen Variante des erfindungsgemäßen Verfahrens eine Beschichtungszusammensetzung eingesetzt wie oben im Kontext der ersten speziellen Variante des erfindungsgemäßen Verfahrens beschrieben, welche in einer Trägerflüssigkeit dispergierte Partikel eines oder mehrerer Feuerfeststoffe sowie eine oder mehrere Verbindungen enthält, die in der Lage sind, durch Umsetzung mit Formaldehyd nichtflüchtige Verbindungen zu bilden, so dass die Emission von Formaldehyd bei der thermischen Behandlung zur Entfernung der Trägerflüssigkeit der Beschichtungszusammensetzung weiter reduziert wird.

Bei dieser zweiten speziellen Variante des erfindungsgemäßen Verfahrens ist es besonders bevorzugt, dass alle zusammenzusetzenden Formkörper durch Formen einer Formstoffmischung enthaltend die Komponenten (i) und (ii) eines Bindemittelsystems gemäß dem oben beschriebenen zweiten Aspekt der vorliegenden Erfindung und Härten des Bindemittelsystems in der geformten Formstoffmischung hergestellt werden. Bevorzugt umfasst ein Verfahren gemäß der zweiten speziellen Variante des erfindungsgemäßen Verfahrens daher die Schritte

- Herstellen einer Formstoffmischung durch Vermischen der Phenolharz-Komponente (i) und der Polyisocyanat-Komponente (ii) eines Bindemittelsystems gemäß dem zweiten Aspekt der Erfindung wie oben beschrieben mit einem Formgrundstoff und optional weiteren Bestandteilen der herzustellenden Formstoffmischung, so dass eine Formstoffmischung umfassend die Phenolharz-Komponente (i) und die Polyisocyanat-Komponente (ii) eines Bindemittelsystems gemäß dem zweiten Aspekt der Erfindung wie oben beschrieben und einen Formgrundstoff gebildet wird,

- Herstellen von zwei oder mehr Formkörpern jeweils durch Formen der Formstoffmischung und Härten des Bindemittelsystems der geformten Formstoffmischung,

- Auftragen einer Beschichtungszusammensetzung umfassend in einer Trägerflüssigkeit dispergierte Partikel eines oder mehrerer Feuerfeststoffe auf einen, mehrere oder sämtliche Formkörper, wobei beschichtete Formkörper gebildet werden, deren Oberfläche mit der Beschichtungszusammensetzung versehene Bereiche aufweisen,

- Verbinden der Formkörper, wobei einer, mehrere oder sämtliche Formkörper beschichtete Formkörper sind, zu einem zusammengesetzten Formkörper,

- thermische Behandlung des zusammengesetzten Formkörpers bei einer Temperatur oberhalb von 40 °C, vorzugsweise im Bereich von 50 °C bis 200 °C, wobei ein Artikel aus der Gruppe bestehend aus Gießereiformen und Gießereikernen und Kombinationen einer Gießform mit Kernen erhalten wird, dessen Oberfläche Bereiche aufweist, in denen ein Partikel eines oder mehrerer Feuerfeststoffe umfassender Überzug angeordnet ist.

Ein vierter Aspekt der vorliegenden Offenbarung, der kein eigenständiger Aspekt der vorliegenden Erfindung ist, betrifft Artikel aus der Gruppe bestehend aus Gießereiformen und Gießereikernen. Derartige Artikel sind herstellbar nach einem Verfahren gemäß der oben beschriebenen bevorzugten ersten bzw. zweiten speziellen Variante des erfindungsgemäßen Verfahrens.

In einer ersten Ausführungsform umfasst ein Artikel einen Formkörper, der

- einen Formgrundstoff gebunden durch ein durch Härten eines Bindemittelsystems gemäß dem oben beschriebenen zweiten Aspekt der Erfindung gebildetes Polyurethan,

- sowie ein oder mehrere durch Umsetzen von ß-Dicarbonylverbindungen b) mit Formaldehyd gebildete Reaktionsprodukte enthält

wobei die Oberfläche des Artikels Bereiche aufweist, in denen ein Überzug angeordnet ist, der Partikel eines oder mehrerer Feuerfeststoffe umfasst.

In dieser ersten Ausführungsform umfasst ein Artikel einen Formkörper, der einen Formgrundstoff gebunden durch ein durch Härten eines Bindemittelsystems gemäß dem oben beschriebenen zweiten Aspekt der Erfindung gebildetes Polyurethan, sowie eine oder mehrere durch Umsetzen von ß-Dicarbonylverbindungen b) mit Formaldehyd gebildete Reaktionsprodukte enthält. Die Oberfläche des Artikels weist Bereiche auf, in denen ein Überzug angeordnet ist, der Partikel eines oder mehrerer Feuerfeststoffe umfasst. Der Überzug bildet eine Oberfläche der Gießereiform oder des Gießereikerns, die beim Gießvorgang mit einer Metallschmelze in Kontakt kommt. Dabei ist es nicht erforderlich, dass sich der Überzug über die gesamte Oberfläche des Artikels erstreckt. Derartige Überzüge werden üblicherweise als Schlichten bezeichnet.

Artikel dieser ersten Ausführungsform sind herstellbar durch ein erfindungsgemäßes Verfahren gemäß der oben beschriebenen ersten speziellen Variante.

In einer zweiten Ausführungsform umfasst ein Artikel mehrere miteinander verbundene Formkörper, wobei mindestens einer miteinander verbundenen Formkörper

- einen Formgrundstoff gebunden durch ein durch Härten eines Bindemittelsystems gemäß dem oben beschriebenen zweiten Aspekt der Erfindung gebildetes Polyurethan,

- sowie ein oder mehrere durch Umsetzen von β-Dicarbonylverbindungen b) mit Formaldehyd gebildete Reaktionsprodukte enthält

wobei die Oberfläche des Artikels Bereiche aufweist, in denen ein Überzug angeordnet ist, der Partikel eines oder mehrerer Feuerfeststoffe umfasst.

In dieser zweiten Ausführungsform umfasst ein Artikel mehrere miteinander verbundene Formkörper. Mindestens einer der miteinander verbundenen Formkörper enthält einen Formgrundstoff gebunden durch ein durch Härten eines Bindemittelsystems gemäß dem oben beschriebenen zweiten Aspekt der Erfindung gebildetes Polyurethan, sowie eine oder mehrere durch Umsetzen von β-Dicarbonylverbindungen b) mit Formaldehyd gebildete Reaktionsprodukte. Bevorzugt enthalten alle miteinander verbundenen Formkörper einen Formgrundstoff gebunden durch ein durch Härten eines Bindemittelsystems gemäß dem oben beschriebenen zweiten Aspekt der Erfindung gebildetes Polyurethan, sowie eine oder mehrere durch Umsetzen von ß-Dicarbonylverbindungen b) mit Formaldehyd gebildete Reaktionsprodukte.

Die Oberfläche des Artikels weist Bereiche auf, in denen ein Überzug angeordnet ist, der Partikel eines oder mehrerer Feuerfeststoffe umfasst. Der Überzug bildet eine Oberfläche der Gießereiform oder des Gießereikerns, die beim Gießvorgang mit einer Metallschmelze in Kontakt kommt. Dabei ist es nicht erforderlich, dass sich der Überzug über die gesamte Oberfläche des Artikels erstreckt. Derartige Überzüge werden üblicherweise als Schlichten bezeichnet.

Artikel dieser zweiten Ausführungsform sind herstellbar durch ein erfindungsgemäßes Verfahren gemäß der oben beschriebenen zweiten speziellen Variante.

In besonders bevorzugten Artikeln enthält der Überzug durch Umsetzen von Formaldehyd mit einer oder mehrerer Verbindungen ausgewählt aus der Gruppe bestehend aus

- $\beta$-Dicarbonylverbindungen

- zwei- und dreiwertige Phenole
- Phenol-Formaldehyd-Novolake und Resorcin-Formaldehyd-Novolake
- Aminosäuren
- primäre und sekundäre Aminosilane
- Alkalimetall-Hydrogensulfite
- Melamin, Benzoguanamin, Harnstoff und deren Derivate
- Hydrazin und Carbonohydrazid und deren Derivate
- primäre und sekundäre Amine
- Baumharze, Tannine und Lignine

gebildete Reaktionsprodukte, d.h. in einem solchen besonders bevorzugten Artikel enthält der Überzug die durch Umsetzen in der Beschichtungszusammensetzung enthaltener Formaldehydfänger mit bei der thermischen Behandlung des beschichteten Formkörpers entstandenem Formaldehyd gebildeten Reaktionsprodukte.

Weitere Aspekte der vorliegenden Erfindung betreffen

- die Verwendung von β-Dicarbonylverbindungen zur Herstellung von Isocyanat-Kompositionen gemäß dem oben beschriebenen ersten Aspekt der Erfindung
- die Verwendung einer Isocyanat-Komposition gemäß dem oben beschriebenen ersten Aspekt der Erfindung zur Herstellung von Bindemittelsystemen gemäß dem oben beschriebenen zweiten Aspekt der Erfindung
- die Verwendung eines Bindemittelsystems gemäß dem oben beschriebenen zweiten Aspekt der Erfindung zur Herstellung von Artikeln aus der Gruppe bestehend aus Gießereiformen, Gießereikernen und Speisern
- die Verwendung eines Bindemittelsystems gemäß dem oben beschriebenen zweiten Aspekt der Erfindung in einem Verfahren gemäß dem oben beschriebenen dritten Aspekt der Erfindung, wobei bei dem erfindungsgemäßen der durch Härten des Bindemittelsystems in der geformten Formstoffmischung gebildete Formkörper einer weiteren Bearbeitung unter Wärmezufuhr unterzogen werden kann bzw. wobei das erfindungsgemäße Verfahren einen weiteren Bearbeitungsschritt umfassen kann, der eine thermische Behandlung des durch Härten des Bindemittelsystems in der geformten Formstoffmischung gebildeten Formkörpers umfasst.

Hinsichtlich bevorzugter β-Dicarbonylverbindungen gelten die obenstehenden Ausführungen zum ersten Aspekt der vorliegenden Erfindung.

Hinsichtlich bevorzugter Merkmale und Ausführungsformen der Isocyanat-Komposition gelten die obenstehenden Ausführungen zum ersten Aspekt der vorliegenden Erfindung.

Hinsichtlich bevorzugter Merkmale und Ausführungsformen des Bindemittelsystems gelten die obenstehenden Ausführungen zum zweiten Aspekt der vorliegenden Erfindung.

Hinsichtlich bevorzugter Merkmale, Versionen und Varianten des Verfahrens gelten die obenstehenden Ausführungen zum dritten Aspekt der vorliegenden Erfindung.

Die Erfindung wird nachstehend anhand von Ausführungsbeispielen und Vergleichsbeispielen weiter erläutert.

1. <u>Herstellung und Test von Prüfkörpern in Form von Biegeriegeln</u>

1.1 <u>Zusammensetzung der Bindemittelsysteme</u>

Die Angaben in Gew.% beziehen sich jeweils auf die Gesamtmasse der Phenolharz-Komponente (i) bzw. der Polyisocyanat-Komponente (ii).

Bindemittelsystem I

Phenolharz-Komponente (i):

| | |
|---|---|
| Phenolharz e) | ortho, ortho'-kondensiertes Resol mit terminalen Methylolgruppen $-CH_2OH$ sowie durch Methanol veretherten terminalen Methylolgruppen $-CH_2OCH_3$, 54 Gew% |
| Lösemittel f) | Mischung aus Tetraethylsilikat und Dialkylestern von $C_4$-$C_6$-Dicarbonsäuren |
| Isocyanat-Komponente(ii) | |
| Isocyanat: a) | polymeres MDI, 85 Gew.% |
| Lösemittel c) | Mischung aus Rapsölmethylester und Propylencarbonat |

In einer ersten nicht erfindungsgemäßen Variante des Bindemittelsystems I enthält weder Komponente (i) noch Komponente (ii) eine ß-Dicarbonylverbindung. In einer zweiten nicht erfindungsgemäßen Variante des Bindemittelsystems I enthält Komponente (i) Diethylmalonat als ß-Dicarbonylverbindung h), wobei die Gesamtkonzentration von unreagierten und in Reaktionsprodukten mit Formaldehyd gebundenem Diethylmalonat 6 Gew.% beträgt, und Komponente (ii) enthält keine ß-Dicarbonylverbindung.

In einer ersten erfindungsgemäßen Variante des Bindemittelsystems I enthält Komponente (i) keine ß-Dicarbonylverbindung und Komponente (ii) 5 Gew.% Diethylmalonat als ß-Dicarbonylverbindung b). In einer zweiten erfindungsgemäßen Variante des Bindemittelsystems I enthält Komponente (i) Diethylmalonat als ß-Dicarbonylverbindung h), wobei die Gesamtkonzentration von unreagierten und in Reaktionsprodukten mit Formaldehyd gebundenem Diethylmalonat 1 Gew.% beträgt, und Komponente (ii) 5 Gew.% Diethylmalonat als ß-Dicarbonylverbindung b).

Bindemittelsystem II

Phenolharz-Komponente (i):

| | |
|---|---|
| Phenolharz e) | ortho, ortho'-kondensiertes Resol, mit terminalen Methylolgruppen $-CH_2OH$ sowie durch Methanol veretherten terminalen Methylolgruppen $-CH_2OCH_3$, 54,5 Gew% |
| Lösemittel f) | Mischung aus Dialkylestern von $C_4$-$C_6$-Dicarbonsäuren und Rapsölmethylester |
| Isocyanat-Komponente (ii) | |
| Isocyanat: a) | polymeres MDI, 85 Gew% |
| Lösemittel c) | Rapsölmethylester |

In einer nicht erfindungsgemäßen Variante des Bindemittelsystems II enthält weder Komponente (i) noch Komponente (ii) eine ß-Dicarbonylverbindung.

In einer erfindungsgemäßen Variante des Bindemittelsystems II enthält Komponente (i) Diethylmalonat als ß-Dicarbonylverbindung h), wobei die Gesamtkonzentration von unreagierten und in Reaktionsprodukten mit Formaldehyd gebundenem Diethylmalonat 1 Gew.% beträgt, und Komponente (ii) 3 Gew.% Diethylmalonat als ß-Dicarbonylverbindung b).

1.2 Herstellung von Prüfkörpern (Cold-Box-Verfahren)

Aus Formstoffmischungen umfassend Quarzsand H32 als Formgrundstoff sowie jeweils einer (erfindungsgemäßen bzw. nicht-erfindungsgemäßen) Variante eines der in Punkt 1.1 beschriebenen Bindemittelsysteme I und II wurden im Cold-Box-Verfahren Prüfköper in Form von Biegeriegeln hergestellt.

Zur Herstellung der Formstoffmischung wurde der Formgrundstoff (100 Gewichtsteile) in einem Mischbehälter vorgelegt. Die Phenolharz-Komponente (i) (0,7 Gewichtsteile) und die Polyisocyanat-Komponente (ii) (0,7 Gewichtsteile) des jeweiligen Bindemittelsystems wurden dann in dem Mischbehälter so eingewogen, dass sie sich nicht direkt vermischen. Anschließend wurden Formgrundstoff, Phenolharz-Komponente (i) und Polyisocyanat-Komponente (ii) in einem Bullmischer für 120 Sekunden auf Stufe 4 zu einer Formstoffmischung vermischt.

Das Formen der Formstoffmischung erfolgte mittels einer Multiserw-Kernschießmaschine bei einem Schießdruck von 4 bar (400 kPa). Zum Härten des Bindemittelsystems in der geformten Formstoffmischung wurde 10 Sekunden lang bei einem Begasungsdruck von 2 bar (200 kPa) mittels eines Begasungsgerätes Titronic 110 Plus mit Dimethylpropylamin (in einem Trägergasstrom) bei einer Temperatur im Bereich von 20 bis 30 °C begast.

1.3 Messung der Formaldehyd-Emissionen bei thermischer Behandlung

Ausgewählte Prüfkörper ohne Schlichteüberzug wurden in einem Röhrenofen einer Temperatur von 177 °C ausgesetzt. Eine Minute nachdem die Prüfkörper in den auf 177 °C aufgeheizten Ofen gebracht worden waren, wurde damit begonnen, die Konzentration von Formaldehyd in der Ofenluft zu messen. Dazu wird 10 Minuten lang mittels einer Pumpe Xact 5000 (Fa. Dräger) mit einem Volumenstrom von 1,5 L/min Luft aus dem Röhrenofen durch eine LpDNPH-Kartusche (LpDNPH Cartridge S10 volume 3 mL der Firma Supelco) gezogen. Die Analyse der Kartusche erfolgte mittels HPLC gemäß DIN 16000-3.

Die Ergebnisse der Messungen sind in der folgenden Tabelle zusammengestellt:

| Bindemittelsystem | Diethylmalonat in Bindemittel-Komponente | Konzentration Formaldehyd in der Ofenluft [mg/m$^3$] nach 10 Minuten |
|---|---|---|
| I<br>erste nicht-erfindungsgemäße Variante | keine | 5 |
| I<br>zweite nicht-erfindungsgemäße Variante | (i) | 2,2 |
| I<br>zweite erfindungsgemäße Variante | (i), (ii) | 1,1 |
| II<br>Nicht erfindungsgemäße Variante | keine | 6,0 |
| II<br>Erfindungsgemäße Variante | (i), (ii) | 4,5 |

Bei thermischer Belastung setzen Prüfkörper, die mit einem erfindungsgemäßen Bindemittelsystem hergestellt wurden, deutlich weniger Formaldehyd frei als die mit einer nichterfindungsgemäßen Variante des entsprechenden Bindemittelsystems hergestellten Prüfkörper.

1.4 Messungen der Biegefestigkeit

Um sicherzustellen, dass der Zusatz von Diethylmalonat zur Polyisocyanat-Komponente des Bindemittelsystems keinen negativen Einfluss auf die Festigkeit mit diesem Bindemittelsystem hergestellter Formkörper hat, wurden Biegefestigkeiten der mit verschiedenen Varianten des Bindemittelsystems I hergestellten Prüfkörper in Abhängigkeit von verschiedenen Parametern (Zeitpunkt nach Ende des Härtens, Lagerungszeit der Formstoffmischung vor der Formung, Lagerungsbedingungen der hergestellten Prüfkörper, Schlichteüberzug) ermittelt. Zu Details verweisen wir auf die nachfolgende Tabelle. Darin bedeuten:

B-Kern (1h): Prüfkörper sofort nach dem Härten in Schlichtezusammensetzung getaucht, im Digestor bei Raumtemperatur gelagert, nach 1h geprüft.

D-Kern kalt: Prüfkörper sofort nach dem Härten in Schlichtezusammensetzung getaucht, 1h bei 150 °C im Ofen getrocknet, nach Erkalten auf Raumtemperatur geprüft.

Die Schlichtezusammensetzung enthält Wasser als Trägerflüssigkeit und Partikel von Aluminiumsilikat als Feuerfeststoff.

F-Kern: Prüfkörper sofort nach dem Härten bei 100% relativer Luftfeuchtigkeit bei Raumtemperatur für 1 Tag gelagert und nach Entnahme aus der Lagerung sofort geprüft.

Jede Bestimmung erfolgte an einem eigens hergestellten Prüfkörper. Die Ergebnisse der Messungen sind in der folgenden Tabelle zusammengestellt:

| Variante des Bindemittelsystems I | erste nicht-erfindungsgemäße Variante | erste erfindungsgemäße Variante | zweite erfindungsgemäße Variante |
|---|---|---|---|
| Diethylmalonat in Bindemittel-Komponente | keine | (ii) | (i) und (ii) |
| *Biegefestigkeiten* | | | |
| *keine Lagerung der Formstoffmischung vor dem Formen* | | | |
| 15 sec nach Ende des Härtens | 250 | 240 | 260 |
| 1 h nach Ende des Härtens | 390 | 410 | 410 |
| 24 h nach Ende des Härtens | 460 | 490 | 490 |
| *1 h Lagerung der Formstoffmischung vor dem Formen* | | | |
| 15 sec nach Ende des Härtens | 260 | 250 | 250 |
| 1 h nach Ende des Härtens | 400 | 400 | 390 |
| 24 h nach Ende des Härtens | 470 | 470 | 470 |
| *Prüfkörper mit Schlichteüberzug* | | | |
| B- 1d | 420 | 470 | 450 |
| D kalt | 520 | 520 | 530 |
| *Lagerung bei 100 % Luftfeuchtigkeit* | | | |
| F - 1 d | 390 | 400 | 420 |

Die mit erfindungsgemäßen Varianten des Bindemittelsystems I hergestellten Prüfkörper zeigen unter allen Bedingungen ähnliche Biegefestigkeiten wie die mit den nichterfindungsgemäßen Varianten des Bindemittelsystems I hergestellten Prüfkörper.

2. Herstellung von Kernen für den Guss von Bremsscheiben

Aus Formstoffmischungen umfassend Quarzsand H32 als Formgrundstoff sowie jeweils eine (erfindungsgemäße oder nicht-erfindungsgemäße) Variante des in Punkt 1.1 beschriebenen Bindemittelsystems I wurden im Cold-Box-Verfahren Kerne für den Guss von Bremsscheiben hergestellt.

Zur Herstellung der Formstoffmischung wurde der Formgrundstoff (100 Gewichtsteile) in einem Mischbehälter vorgelegt. Die Phenolharz-Komponente (i) (1 Gewichtsteil) und der Polyisocyanat-Komponente (ii) (1 Gewichtsteil) der jeweiligen Variante des Bindemittelsystems I wurden dann in dem Mischbehälter so eingewogen, dass sie sich nicht direkt vermischen. Anschließend wurden Formgrundstoff, Phenolharz-Komponente und Polyisocyanat-Komponente in einem Glass-Mischer vermischt.

Das Formen der Formstoffmischung erfolgte mittels einer Kernschießmaschine Laempe LL20 bei einem Schießdruck von 4 bar (400 kPa) und einer Schusszeit von 2,5 sec. Zum Härten des Bindemittelsystems in der geformten Formstoffmischung wurde bei einem Begasungsdruck von 3 bar (300 kPa) mittels einer Lüber-Begasungseinheit mit Dimethylpropylamin (DMPA) bei 120 °C begast.

Die Kerne wurden nicht mit einem Schlichteüberzug versehen. Um den Einfluss der Bindemittelzusammensetzung auf die Menge der Formaldehyd-Emissionen bei thermischer Belastung zu ermitteln, wurden die Kerne einer thermischen Behandlung unterzogen bei ähnlichen Bedingungen wie bei der Herstellung von Schlichteüberzügen.

30 so hergestellte Kerne wurden in einen Trockenofen der Firma Elpo (nicht identisch mit dem Ofen, der für die unter Punkt 1.3 beschriebenen Versuche verwendet wurde) gestellt, der auf 170 °C vorgeheizt war. Der Ofen wird durchströmt von einem Luftstrom mit einer Geschwindigkeit von 1600 $m^3/h$.

Nachdem die Kerne in den Ofen gestellt worden waren und der Ofen wieder die Solltemperatur von 170 °C erreicht hat, wurde die Probennahme zur Formaldehydbestimmung gestartet. Es wurde eine Pumpe Xact 5000 (Fa. Dräger) mit Stabsonde verwendet. Zur Probennahme wurde die Stabsonde in das Abgasrohr des Trockenofens eingeführt und 15 Minuten lang ein Volumenstrom von 2 L/min aus dem Abgasrohr gezogen und durch LpDNPH Kartuschen (LpDNPH Cartridge S10 volume 3 mL der Firma Supelco) geleitet. Die Analyse der Kartuschen erfolgte gemäß DIN ISO 16000-3.

Die Ergebnisse der Messungen (Doppelbestimmung, daher jeweils zwei Werte) sind in der folgenden Tabelle zusammengestellt:

| Diethylmalonat in Bindemittel-Komponente | Erfindungsgemäß? | Konzentration von Formaldehyd in der Abluft [mg/m$^3$] nach 15 Minuten |
|---|---|---|
| keine | nein | 0,846 / 0,781 |
| (ii) | Ja | 0,662 / 0,580 |
| (i), (ii) | Ja | 0,492 / 0,537 |

Die Kerne, die mit einer erfindungsgemäßen Variante des Bindemittelsystems I hergestellt wurden, setzen bei thermischer Belastung deutlich weniger Formaldehyd frei als die mit der ersten nichterfindungsgemäßen Variante des Bindemittelsystems I hergestellten Kerne. Besonders stark ist die Verminderung der Formaldehyd-Emissionen, wenn beiden Bindemittelkomponenten Diethylmalonat zugesetzt ist.

**Patentansprüche**

**1.** Isocyanat-Komposition enthaltend

a) ein oder mehrere Isocyanate mit mindestens zwei Isocyanat-Gruppen pro Molekül
b) eine oder mehrere *ß*-Dicarbonylverbindungen
c) ein Lösemittel, welches kein Isocyanat ist und keine *ß*-Dicarbonylverbindung ist und kein Aldehyd,
wobei die Konzentration

a) der Isocyanate 60 % bis 89 %
b) der *ß*-Dicarbonylverbindungen 1 % bis 38 %

beträgt, jeweils bezogen auf die Gesamtmasse der Isocyanat-Komposition,
mit Ausnahme einer homogenen Mischung aus 80% Lupranat M 20 S und 15% lineares $C_{10-13}$Alkylbenzol und 5% Ethylacetoacetat, wobei Lupranat M 20 S polymeres MDI, Funktionalität 2,6 ist.

**2.** Komposition nach Anspruch 1, wobei

a) die Isocyanate mit mindestens zwei Isocyanat-Gruppen pro Molekül ausgewählt sind aus der Gruppe bestehend aus

- Methylenbis(phenylisocyanaten),
- Polymethylen-Polyphenyl-Isocyanaten,
- aliphatischen Isocyanaten,
- cycloaliphatischen Isocyanaten,
- Isocyanaten mit mindestens zwei Isocyanat-Gruppen und einer Carbodiimid-Gruppe pro Molekül,
- Isocyanaten mit mindestens zwei Isocyanat-Gruppen und einer Urethonimin-Gruppe pro Molekül,

und/oder
b) die *ß*-Dicarbonylverbindungen ausgewählt sind aus der Gruppe der Dialkylester der Malonsäure,
und/oder
c) das Lösemittel ausgewählt ist aus der Gruppe bestehend aus

- Dialkylester von $C_4$-$C_6$-Dicarbonsäuren,
- gesättigte und ungesättigte Fettsäurealkylester,
- Alkylencarbonate,
- flüssige Kohlenwasserstoffe
- Verbindungen aus der Gruppe der Alkylsilane, Alkyl/Alkoxy-Silane, Alkoxysilane, Alkylsiloxane, Alkyl/Alkoxy-Siloxane und Alkoxysiloxane der Formel (I)

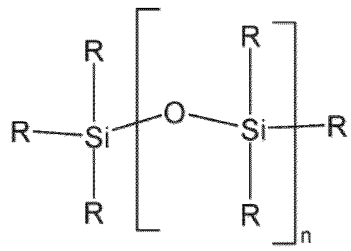

(I)

wobei n eine ganze Zahl ist von 0 bis 20, und
jedes R unabhängig von den anderen R ausgewählt ist aus der Gruppe der Alkylgruppen mit einem bis 6 Kohlenstoffatomen und der Alkoxygruppen mit einem bis 6 Kohlenstoffatomen.

**3.** Bindemittelsystem umfassend

(i) eine Phenolharz-Komponente und
(ii) eine davon getrennten Polyisocyanat-Komponente,
wobei
(i) die Phenolharzkomponente enthält:

e) ein oder mehrere Phenolharze
f) ein Lösemittel

wobei bezogen auf die Gesamtmasse der Phenolharz-Komponente die Konzentration der Phenolharze e) 40 % bis 60 % beträgt
und
(ii) die Polyisocyanat-Komponente eine Isocyanat-Komposition ist wie in einem der Ansprüche 1 und 2 definiert.

**4.** Bindemittelsystem nach Anspruch 3, wobei in der Phenolharz-Komponente (i)

e) das Phenolharz ein ortho, ortho'-kondensiertes Resol ist aufweisend

- unveretherte terminale Methylol-Gruppen
und/oder
- veretherte terminale Methylolgruppen

und/oder
f) das Lösemittel ausgewählt ist aus der Gruppe bestehend aus

- Dialkylester von $C_4$-$C_6$-Dicarbonsäuren,
- gesättigte und ungesättigte Fettsäurealkylester,
- Alkylencarbonate,
- Substanzen aus der Gruppe bestehend aus Cashewnussschalenöl, Komponenten von Cashewnussschalenöl und Derivaten von Cashewnussschalenöl,
- flüssige Kohlenwasserstoffe,
- Verbindungen aus der Gruppe der Alkylsilane, Alkyl/Alkoxy-Silane, Alkoxysilane, Alkylsiloxane, Alkyl/Alkoxy-Siloxane und Alkoxysiloxane der Formel (I)

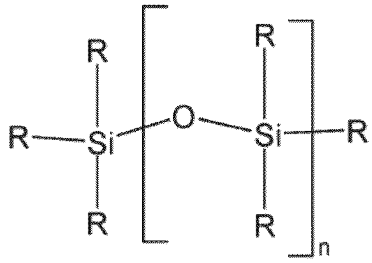

(I)

wobei n eine ganze Zahl ist von 0 bis 20, und
jedes R unabhängig von den anderen R ausgewählt ist aus der Gruppe der Alkylgruppen mit einem bis 6 Kohlenstoffatomen und Alkoxygruppen mit einem bis 6 Kohlenstoffatomen.

**5.** Bindemittelsystem nach Anspruch 3 oder 4, wobei die Phenolharz-Komponente (i) weiterhin enthält

g) molekulares Formaldehyd in einer Konzentration von weniger als 0,1 %, und/oder
h) eine oder mehrere ß-Dicarbonylverbindungen sowie durch Umsetzen dieser ß-Dicarbonylverbindungen mit Formaldehyd gebildete Reaktionsprodukte
und/oder
i) monomere Verbindungen aus der Gruppe der Phenole in einer Konzentration von 10 % oder weniger
wobei die Konzentrationen jeweils auf die Gesamtmasse der Phenolharz-Komponente (i) bezogen sind.

**6.** Verfahren umfassend die Schritte:

- Herstellen einer Formstoffmischung durch Vermischen der Phenolharz-Komponente (i) und der Polyisocyanat-Komponente (ii) eines Bindemittelsystems gemäß einem der Ansprüche 3 bis 5 mit einem Formgrundstoff, so dass eine Formstoffmischung umfassend die Phenolharz-Komponente (i) und die Polyisocyanat-Komponente (ii) eines Bindemittelsystems gemäß einem der Ansprüche 3 bis 5 und einen Formgrundstoff gebildet wird,
- Formen der Formstoffmischung,
- Härten des Bindemittelsystems in der geformten Formstoffmischung, wobei ein Formkörper gebildet wird.

**7.** Verfahren nach Anspruch 6, wobei zum Härten des Bindemittelsystems die geformte Formstoffmischung kontaktiert wird

- mit einem gasförmigen tertiären Amin oder mit einer Mischung aus zwei oder mehreren gasförmigen tertiären Aminen
oder
- mit einem flüssigen tertiären Amin oder mit einer Mischung aus zwei oder mehreren flüssigen tertiären Aminen.

**8.** Verfahren nach einem der Ansprüche 6 und 7, wobei der Formkörper ein Artikel aus der Gruppe bestehend aus Speisern, Gießereiformen und Gießereikernen ist.

**9.** Verfahren nach einem der Ansprüche 6 und 7, wobei mehrere Formkörper gebildet und zu einem Artikel aus der Gruppe bestehend aus Gießereiformen und Gießereikernen verbunden werden.

**10.** Verfahren nach einem der Ansprüche 6 und 7, weiter umfassend die Schritte

- Auftragen einer Beschichtungszusammensetzung umfassend in einer Trägerflüssigkeit dispergierte Partikel eines oder mehrerer Feuerfeststoffe auf den Formkörper, wobei ein beschichteter Formkörper gebildet wird, dessen Oberfläche mit der Beschichtungszusammensetzung versehene Bereiche aufweist,
- thermische Behandlung des beschichteten Formkörpers bei einer Temperatur oberhalb von 40 °C, vorzugsweise im Bereich von 50 °C bis 200 °C, wobei ein Artikel aus der Gruppe bestehend aus Gießereiformen und Gießereikernen gebildet wird, dessen Oberfläche Bereiche aufweist, in denen ein Überzug angeordnet ist, der Partikel eines oder mehrerer Feuerfeststoffe umfasst.

**11.** Verfahren nach einem der Ansprüche 6 und 7, umfassend die Schritte

- Herstellen einer Formstoffmischung durch Vermischen der Phenolharz-Komponente (i) und der Polyisocyanat-Komponente (ii) eines Bindemittelsystems gemäß einem der Ansprüche 3 bis 5 mit einem Formgrundstoff, so dass eine Formstoffmischung umfassend die Phenolharz-Komponente (i) und die Polyisocyanat-Komponente (ii) eines Bindemittelsystems gemäß einem der Ansprüche 3 bis 5 und einen Formgrundstoff gebildet wird,
- Herstellen von zwei oder mehr Formkörpern jeweils durch Formen der Formstoffmischung und Härten des Bindemittelsystems in der geformten Formstoffmischung,
- Auftragen einer Beschichtungszusammensetzung umfassend in einer Trägerflüssigkeit dispergierte Partikel eines oder mehrerer Feuerfeststoffe auf einen, mehrere oder sämtliche Formkörper, wobei beschichtete Formkörper gebildet werden, deren Oberfläche mit der Beschichtungszusammensetzung versehene Bereiche aufweisen,
- Verbinden der Formkörper, wobei einer, mehrere oder sämtliche Formkörper beschichtete Formkörper sind, zu einem zusammengesetzten Formkörper,
- thermische Behandlung des zusammengesetzten Formkörpers bei einer Temperatur oberhalb von 40 °C, vorzugsweise im Bereich von 50 °C bis 200 °C, wobei ein Artikel aus der Gruppe bestehend aus Gießereiformen und Gießereikernen erhalten wird, dessen Oberfläche Bereiche aufweist, in denen ein Überzug angeordnet ist, der Partikel eines oder mehrerer Feuerfeststoffe umfasst.

**12.** Verwendung von β-Dicarbonylverbindungen zur Herstellung von Isocyanat-Kompositionen gemäß einem der Ansprüche 1 und 2.

**13.** Verwendung einer Isocyanat-Komposition nach einem der Ansprüche 1 und 2 zur Herstellung eines Bindemittelsystems gemäß einem der Ansprüche 3 bis 5.

**14.** Verwendung eines Bindemittelsystems nach einem der Ansprüche 3 bis 5 zur Herstellung von Artikeln aus der Gruppe bestehend aus Gießereiformen, Gießereikernen und Speisern.

## Claims

**1.** Isocyanate composition comprising

a) one or more isocyanates having at least two isocyanate groups per molecule
b) one or more β-dicarbonyl compounds
c) a solvent which is not an isocyanate, nor a β-dicarbonyl compound, nor an aldehyde,
where the concentration

a) of the isocyanates is 60% to 89%
b) of the β-dicarbonyl compounds is 1% to 38%,

based in each case on the total mass of the isocyanate composition,
excluding a homogeneous mixture of 80% Lupranat M 20 S and 15% linear $C_{10-13}$ alkylbenzene and 5% ethyl acetoacetate, where Lupranat M 20 S is polymeric MDI of functionality 2.6.

**2.** Composition according to Claim 1, wherein

a) the isocyanates having at least two isocyanate groups per molecule are selected from the group consisting of

- methylenebis(phenyl isocyanates),
- polymethylene polyphenyl isocyanates,
- aliphatic isocyanates,
- cycloaliphatic isocyanates,
- isocyanates having at least two isocyanate groups and one carbodiimide group per molecule,
- isocyanates having at least two isocyanate groups and one uretonimine group per molecule,

and/or
b) the β-dicarbonyl compounds are selected from the group of the dialkyl esters of malonic acid,

and/or
c) the solvent is selected from the group consisting of

- dialkyl esters of $C_4$-$C_6$ dicarboxylic acids,
- saturated and unsaturated fatty acid alkyl esters,
- alkylene carbonates,
- liquid hydrocarbons,
- compounds from the group of the alkylsilanes, alkyl/alkoxysilanes, alkoxysilanes, alkylsiloxanes, alkyl/alkoxysiloxanes and alkoxysiloxanes of the formula (I)

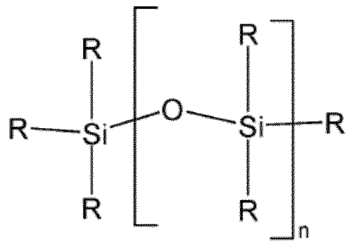

(I)

where n is an integer from 0 to 20, and
each R, independently of the other R, is selected from the group of the alkyl groups having one to 6 carbon atoms and the alkoxy groups having one to 6 carbon atoms.

**3.** Binder system comprising

(i) a phenolic resin component and
(ii) a separate polyisocyanate component,

wherein

(i) the phenolic resin component comprises:

e) one or more phenolic resins,
f) a solvent,
wherein, based on the total mass of the phenolic resin component, the concentration of the phenolic resins e) is 40% to 60%,

and
(ii) the polyisocyanate component is an isocyanate composition as defined in either of Claims 1 and 2.

**4.** Binder system according to Claim 3, wherein, in the phenolic resin component (i),

e) the phenolic resin is an ortho,ortho'-fused resol having

- unetherified terminal methylol groups and/or
- etherified terminal methylol groups and/or

f) the solvent is selected from the group consisting of

- dialkyl esters of $C_4$-$C_6$ dicarboxylic acids,
- saturated and unsaturated fatty acid alkyl esters,
- alkylene carbonates,
- substances from the group consisting of cashew nut shell oil, components of cashew nut shell oil and derivatives of cashew nut shell oil,
- liquid hydrocarbons,
- compounds from the group of the alkylsilanes, alkyl/alkoxysilanes, alkoxysilanes, alkylsiloxanes, alkyl/alkoxysiloxanes and alkoxysiloxanes of the formula (I)

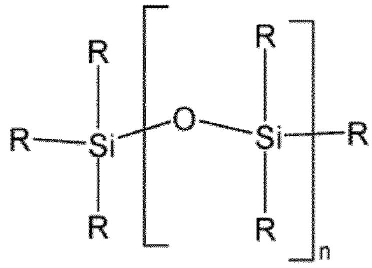

(I)

where n is an integer from 0 to 20, and
each R, independently of the other R, is selected from the group of the alkyl groups having one to 6 carbon atoms and alkoxy groups having one to 6 carbon atoms.

**5.** Binder system according to Claim 3 or 4, wherein the phenolic resin component (i) further comprises

g) molecular formaldehyde in a concentration of less than 0.1%,
and/or
h) one or more β-dicarbonyl compounds, and reaction products formed by reacting these β-dicarbonyl compounds with formaldehyde,
and/or
i) monomeric compounds from the group of the phenols in a concentration of 10% or less,
where the concentrations are each based on the total mass of the phenolic resin component (i).

**6.** Process comprising the steps of:

- producing a moulding material mixture by mixing the phenolic resin component (i) and the polyisocyanate component (ii) of a binder system according to any of Claims 3 to 5 with a moulding material base, so as to form a moulding material mixture comprising the phenolic resin component (i) and the polyisocyanate component (ii) of a binder system according to any of Claims 3 to 5 and a moulding material base,
- moulding the moulding material mixture,
- curing the binder system in the moulded moulding material mixture to form a moulding.

**7.** Process according to Claim 6, wherein the binder system is cured by contacting the moulded moulding material mixture

- with a gaseous tertiary amine or with a mixture of two or more gaseous tertiary amines
or
- with a liquid tertiary amine or with a mixture of two or more liquid tertiary amines.

**8.** Process according to either of Claims 6 and 7, wherein the moulding is an article from the group consisting of feeders, foundry moulds and foundry cores.

**9.** Process according to either of Claims 6 and 7, wherein multiple mouldings are formed and combined to give an article from the group consisting of foundry moulds and foundry cores.

**10.** Process according to either of Claims 6 and 7, further comprising the steps of:

- applying a coating composition comprising particles of one or more refractories dispersed in a carrier fluid to the moulding, forming a coated moulding, the surface of which has regions provided with the coating composition,
- subjecting the coated moulding to thermal treatment at a temperature above 40°C, preferably in the range from 50°C to 200°C, forming an article from the group consisting of foundry moulds and foundry cores, the surface of which has regions in which a coating comprising particles of one or more refractories is disposed.

**11.** Process according to either of Claims 6 and 7, comprising the steps of:

- producing a moulding material mixture by mixing the phenolic resin component (i) and the polyisocyanate component (ii) of a binder system according to any of Claims 3 to 5 with a moulding material base, so as to form a moulding material mixture comprising the phenolic resin component (i) and the polyisocyanate component (ii) of a binder system according to any of Claims 3 to 5 and a moulding material base,
- producing two or more mouldings, each by moulding the moulding material mixture and curing the binder system in the moulded moulding material mixture,
- applying a coating composition comprising particles of one or more refractories dispersed in a carrier fluid to one, more than one or all mouldings, forming coated mouldings, the surfaces of which have regions provided with the coating composition,
- combining the mouldings, where one, more than one or all mouldings are coated mouldings, to give a combined moulding,
- subjecting the combined moulding to thermal treatment at a temperature above 40°C, preferably in the range from 50°C to 200°C, giving an article from the group consisting of foundry moulds and foundry cores, the surface of which has regions in which a coating comprising particles of one or more refractories is disposed.

**12.** Use of β-dicarbonyl compounds for production of isocyanate compositions according to either of Claims 1 and 2.

**13.** Use of an isocyanate composition according to either of Claims 1 and 2 for production of a binder system according to any of Claims 3 to 5.

**14.** Use of a binder system according to any of Claims 3 to 5 for production of articles from the group consisting of foundry moulds, foundry cores and feeders.

## Revendications

**1.** Composition à base d'isocyanate contenant

a) un ou plusieurs isocyanates contenant au moins deux groupes isocyanate par molécule
b) un ou plusieurs composés β-dicarbonyle
c) un solvant qui n'est pas un isocyanate et n'est pas un composé β-dicarbonyle et n'est pas un aldéhyde,
dans laquelle la concentration

a) des isocyanates va de 60 % à 89 %
b) des composés β-dicarbonyle va de 1 % à 38 %

par rapport à la masse totale de la composition à base d'isocyanate, à l'exception d'un mélange homogène composé à 80 % de lupranate M 20 S et à 15 % d'alkylbenzène en $C_{10-13}$ linéaire et à 5 % d'acétoacétate d'éthyle, le lupranate M 20 S étant du MDI polymère, fonctionnalité 2,6.

**2.** Composition selon la revendication 1, dans laquelle

a) les isocyanates avec au moins deux groupes isocyanate par molécule sont choisis parmi le groupe constitué de

- méthylènebis(phénylisocyanates),
- polyméthylène-polyphényl-isocyanates,
- isocyanates aliphatiques,
- isocyanates cycloaliphatiques,
- isocyanates avec au moins deux groupes isocyanate et un groupe carbodiimide par molécule,
- isocyanates avec au moins deux groupes isocyanate et un groupe uréthonimine par molécule,

et/ou
b) les composés β-dicarbonyle sont choisis parmi le groupe des dialkylesters de l'acide malonique,
et/ou
c) le solvant est choisi parmi le groupe constitué de

- dialkylester d'acides dicarboxyliques en $C_4$-$C_6$,
- alkylesters d'acides gras saturés et insaturés,

- carbonates d'alkylène,
- hydrocarbures liquides
- composés du groupe des alkylsilanes, alkyl/alcoxy-silanes, alcoxysilanes, alkylsiloxanes, alkyl/alcoxy-siloxanes et alcoxysiloxanes de la formule (I)

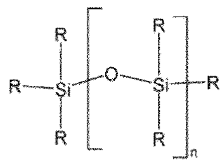

(I)

dans laquelle n est un nombre entier de 0 à 20, et
chaque R indépendamment des autres R est choisi parmi le groupe des groupes alkyle avec 1 à 6 atomes de carbone et des groupes alcoxy avec 1 à 6 atomes de carbone.

**3.** Système de liant comprenant

(i) un composant de résine phénolique et
(ii) un composant polyisocyanate séparé de celui-ci,

dans lequel

(i) le composant de résine phénolique contient :

e) une ou plusieurs résines phénoliques
f) un solvant
dans lequel, par rapport à la masse totale du composant de résine phénolique, la concentration des résines phénoliques e) va de 40 % à 60 %

et
(ii) le composant polyisocyanate est une composition à base d'isocyanate telle que définie dans l'une quelconque des revendications 1 et 2.

**4.** Système de liant selon la revendication 3, dans lequel, dans le composant de résine phénolique (i)

e) la résine phénolique est un résol ortho, ortho' condensé présentant

- des groupes méthylol terminaux non étherifiés
et/ou
- des groupes méthylol terminaux étherifiés

et/ou
f) le solvant est choisi parmi le groupe constitué de

- dialkylester d'acides dicarboxyliques en $C_4$-$C_6$,
- alkylesters d'acides gras saturés et insaturés,
- carbonates d'alkylène,
- substances du groupe constitué d'huile de coques de noix de cajou, de composants d'huile de coques de noix de cajou et de dérivés d'huile de coques de noix de cajou,
- hydrocarbures liquides,
- composés du groupe des alkylsilanes, alkyl/alcoxy-silanes, alcoxysilanes, alkylsiloxanes, alkyl/alcoxy-siloxanes et alcoxysiloxanes de la formule (I)

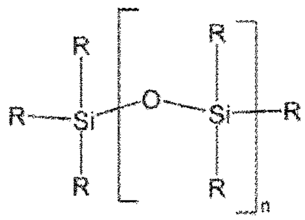

(I)

dans lequel n est un nombre entier de 0 à 20, et
chaque R indépendamment des autres R est choisi parmi le groupe des groupes alkyle avec 1 à 6 atomes de carbone et des groupes alcoxy avec 1 à 6 atomes de carbone.

**5.** Système de liant selon la revendication 3 ou 4, dans lequel le composant de résine phénolique (i) contient par ailleurs

g) du formaldéhyde moléculaire en une concentration inférieure à 0,1%,
et/ou
h) un ou plusieurs composés β-dicarbonyle ainsi que des produits de réaction formés par réaction de ces composés β-dicarbonyle avec du formaldéhyde
et/ou
i) des composés monomères du groupe des phénols en une concentration de 10 % ou moins
dans lequel les concentrations sont respectivement rapportées à la masse totale du composant de résine phénolique (i).

**6.** Procédé comprenant les étapes :

- de réalisation d'un mélange de matières de moulage par mélange du composant de résine phénolique (i) et du composant polyisocyanate (ii) d'un système de liant selon l'une quelconque des revendications 3 à 5 avec une matière première de moulage, de sorte qu'un mélange de matières de moulage comprenant le composant de résine phénolique (i) et le composant à base de polyisocyanate (ii) d'un système de liant selon l'une quelconque des revendications 3 à 5 et une matière première de moulage est formé,
- de moulage du mélange de matières de moulage,
- de durcissement du système de liant dans le mélange de matières de moulage, dans lequel un corps moulé est formé.

**7.** Procédé selon la revendication 6, dans lequel le mélange de matières de moulage moulé est mis en contact pour durcir le système de liant

- avec une amine tertiaire gazeuse ou avec un mélange de deux ou plus amines tertiaires gazeuses
ou
- avec une amine tertiaire liquide ou avec un mélange de deux ou plus amines tertiaires liquides.

**8.** Procédé selon l'une quelconque des revendications 6 et 7, dans lequel le corps moulé est un article du groupe constitué d'alimentateurs, de moules de fonderie et de noyaux de fonderie.

**9.** Procédé selon l'une quelconque des revendications 6 et 7, dans lequel plusieurs corps moulés sont formés et sont reliés en un article du groupe constitué de moules de fonderie et de noyaux de fonderie.

**10.** Procédé selon l'une quelconque des revendications 6 et 7, comprenant en outre les étapes

- d'application d'une composition de revêtement comprenant des particules dispersées dans un fluide porteur d'un ou plusieurs solides inflammables sur le corps moulé, dans lequel un corps moulé revêtu est formé dont la surface présente des zones pourvues de la composition de revêtement,
- de traitement thermique du corps moulé revêtu à une température supérieure à 40 °C, de préférence dans la plage de 50 °C à 200 °C, dans lequel un article du groupe constitué de moules de fonderie et de noyaux de fonderie est formé dont la surface présente des zones dans lesquelles est disposé un revêtement comprenant des particules d'un ou plusieurs solides inflammables.

**11.** Procédé selon l'une quelconque des revendications 6 et 7, comprenant les étapes

- de réalisation d'un mélange de matières de moulage par mélange du composant de résine phénolique (i) et du composant polyisocyanate (ii) d'un système de liant selon l'une quelconque des revendications 3 à 5 avec une matière première de moulage, de sorte qu'un mélange de matières de moulage comprenant le composant de résine phénolique (i) et le composant à base de polyisocyanate (ii) d'un système de liant selon l'une quelconque des revendications 3 à 5 et une matière première de moulage est formé,
- de réalisation de deux corps moulés ou plus respectivement par moulage du mélange de matières de moulage et durcissement du système de liant dans le mélange de matières de moulage moulé,
- d'application d'une composition de revêtement comprenant des particules dispersées dans un fluide porteur d'un ou plusieurs solides inflammables sur un, plusieurs ou tous les corps moulés, dans lequel des corps moulés revêtus sont formés dont la surface présente des zones pourvues de la composition de revêtement,
- de liaison des corps moulés, dans lequel un, plusieurs ou tous les corps moulés sont des corps moulés revêtus, en un corps moulé composé,
- de traitement thermique du corps moulé composé à une température supérieure à 40 °C, de préférence dans la plage de 50 °C à 200 °C, dans lequel un article du groupe constitué de moules de fonderie et de noyaux de fonderie est obtenu, dont la surface présente des zones dans lesquelles est disposé un revêtement comprenant des particules d'un ou plusieurs solides inflammables.

**12.** Utilisation de composés β-dicarbonyle pour la réalisation de compositions à base d'isocyanate selon l'une quelconque des revendications 1 et 2.

**13.** Utilisation d'une composition à base d'isocyanate selon l'une quelconque des revendications 1 et 2 pour la réalisation d'un système de liant selon l'une quelconque des revendications 3 à 5.

**14.** Utilisation d'un système de liant selon l'une quelconque des revendications 3 à 5 pour la réalisation d'articles du groupe constitué de moules de fonderie, de noyaux de fonderie et d'alimentateurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2017153474 A1
- WO 2016165916 A1
- DE 102015107016 A1
- US 4273179 A
- US 20080071055 A1
- WO 2019137583 A1
- EP 0054294 B1
- WO 2007065578 A1
- US 10011677 B2
- EP 2640764 B1
- WO 2013117256 A
- EP 1057554 B1
- WO 2009130335 A
- WO 2018113852 A1
- DE 102016125700 A1
- EP 3333205 A1
- WO 2008113765 A
- DE 102012200967
- WO 2011003637 A1
- DE 102018118291


### In der Beschreibung aufgeführte Nicht-Patentliteratur


- Polyurethane. Kunststoff-Handbuch. Carl Hanser Verlag, 1993
- **FACHBUCH**. Synthetic Methods in Step-Growth Polymers. Wiley, 2003
- *CHEMICAL ABSTRACTS*, 10025-87-3
- *CHEMICAL ABSTRACTS*, 88-95-9
- *CHEMICAL ABSTRACTS*, 842-72-6
- Phenolic Resins: A century of progress. **L. PILATO**. Jahr der Veröffentlichung. Verlag: Springer, 2010